# EUROPEAN PATENT APPLICATION

(11) **EP 4 838 378 A1**
(43) Date of publication of application: **11.11.2026**
(21) Application number: 25891030.6
(22) Date of filing: 20.10.2025
(51) Int. Cl.: G06F 16/27

(54) **DATA SYNCHRONIZATION METHOD AND APPARATUS, AND DEVICE, STORAGE MEDIUM AND PROGRAM PRODUCT**

(30) Priority: 14.11.2024 CN 202411621947
(71) Applicant: Tencent Technology (Shenzhen) Company Limited, Shenzhen, Guangdong 518057 (CN)
(72) Inventor: JIN, Tao, Shenzhen, Guangdong 518057 (CN); LIU, Changhui, Shenzhen, Guangdong 518057 (CN)
(74) Representative: EP&C
(86) International application number: PCT/CN2025/128648
(87) International publication number: WO 2026/103439

(57) **Abstract**

Disclosed in the present application are a data synchronization method and apparatus, and a device, a storage medium and a program product. The method comprises: acquiring target data to be sent to a data receiving end; detecting a network transmission state between an electronic device and the data receiving end, and on the basis of the network transmission state, determining whether a data synchronization mode corresponding to the data receiving end is a real-time synchronization mode or a snapshot synchronization mode; when it is determined that the data synchronization mode is the real-time synchronization mode, immediately sending said target data to the data receiving end; and when it is determined that the data synchronization mode is the snapshot synchronization mode, querying pre-stored service processing logic of the data receiving end, processing said target data on the basis of the service processing logic, and sending snapshot data of a processing result to the data receiving end.

## Description

### RELATED APPLICATION

This application claims priority to Chinese Patent Application No. 2024116219474, entitled "DATA SYNCHRONIZATION METHOD AND APPARATUS, DEVICE, AND STORAGE MEDIUM" filed with the China National Intellectual Property Administration on November 14, 2024.

### FIELD OF THE TECHNOLOGY

This application relates to the technical field of data processing, and in particular, to a data synchronization method and apparatus, a device, a storage medium, and a program product.

### BACKGROUND OF THE DISCLOSURE

Currently, with the rapid development of information technologies, related applications have been gradually integrated into people's lives, providing people with various services. These applications may relate to various types of data transmission and processing. In some scenes, different data receiving ends need to maintain data consistency. If the received data is inconsistent, the performance of the application may be affected. In this case, a data synchronization technology needs to be adopted to synchronously distribute the same data to different data receiving ends.

In the related art, during data synchronization, to improve data transmission and processing efficiency, real-time synchronization is usually performed. For example, data is placed in a message queue, and different data receiving ends may read and process the data from the message queue. The data receiving ends read data from the same message queue, ensuring data consistency. However, when a network transmission state is not good, some data receiving ends cannot acquire data in time, resulting in low utilization of network transmission resources and affecting data processing efficiency.

### SUMMARY

Embodiments of this application provide a data synchronization method and apparatus, a device, a storage medium, and a program product, which can improve the utilization of network transmission resources and improve data transmission and processing efficiency.

According to one aspect, the embodiments of this application provide a data synchronization method, which is executable by an electronic device, and includes:
acquiring target data to be transmitted to a data receiving end;
detecting a network transmission state between the electronic device and the data receiving end, and determining, according to the network transmission state, whether a data synchronization mode corresponding to the data receiving end is a real-time synchronization mode or a snapshot synchronization mode;
directly transmitting, when it is determined that the data synchronization mode is the real-time synchronization mode, the target data to the data receiving end; and
processing, when it is determined that the data synchronization mode is the snapshot synchronization mode, the target data according to pre-stored service processing logic of the data receiving end, and transmitting snapshot data of a result of the processing to the data receiving end.

According to another aspect, the embodiments of this application provide a data synchronization apparatus, including:
an acquisition unit, configured to acquire target data to be transmitted to a data receiving end;
a detection unit, configured to detect a network transmission state between an electronic device and the data receiving end, and determine, according to the network transmission state, whether a data synchronization mode corresponding to the data receiving end is a real-time synchronization mode or a snapshot synchronization mode;
a first processing unit, configured to directly transmit, when it is determined that the data synchronization mode is the real-time synchronization mode, the target data to the data receiving end; and
a second processing unit, configured to process, when it is determined that the data synchronization mode is the snapshot synchronization mode, the target data according to pre-stored service processing logic of the data receiving end, and transmit snapshot data of a result of the processing to the data receiving end.

According to another aspect, the embodiments of this application provide an electronic device, including a processor and a memory,
the memory being configured to store a computer program; and
the processor executing the computer program to implement the foregoing data synchronization method.

According to another aspect, the embodiments of this application provide a computer-readable storage medium, having a computer program stored therein, the computer program, when executed by a processor, implementing the foregoing data synchronization method.

According to another aspect, the embodiments of this application further provide a computer program product, including a computer program, the computer program being stored in a computer-readable storage medium, a processor of a computer device reading the computer program from the computer-readable storage medium and executing the computer program to cause the computer device to perform the foregoing data synchronization method.

### BRIEF DESCRIPTION OF THE DRAWINGS

The accompanying drawings, which are intended to provide a further understanding of technical solutions of this application and constitute a part of the specification, illustrate the technical solutions of this application in combination with embodiments of this application and do not constitute a limitation to the technical solutions of this application.
FIG. 1 is a schematic diagram of a data synchronization method adopted in the related art.
FIG. 2 is an architectural diagram of a system to which a data synchronization method is applied according to an embodiment of this application.
FIG. 3 is a schematic architectural diagram of a system for a streaming media service according to an embodiment of this application.
FIG. 4 is a schematic diagram showing a relationship between a data transmitting end and a data receiving end according to an embodiment of this application.
FIG. 5 is a schematic flowchart of a data synchronization method according to an embodiment of this application.
FIG. 6 is a schematic diagram of transforming target data into log entries according to an embodiment of this application.
FIG. 7 is a schematic diagram of extracting to-be-synchronized data according to an embodiment of this application.
FIG. 8 is a schematic diagram of an application principle of a raft source system (RSS) according to an embodiment of this application.
FIG. 9 is a schematic diagram of various transmitted data structures according to an embodiment of this application.
FIG. 10 is a schematic diagram of a principle of data synchronization according to an embodiment of this application.
FIG. 11 is a schematic diagram of a principle of crash rollback of a distributed source data system according to an embodiment of this application.
FIG. 12 is a structural block diagram of a data synchronization apparatus according to an embodiment of this application.
FIG. 13 is a structural block diagram of an electronic device according to an embodiment of this application.

### DESCRIPTION OF EMBODIMENTS

To make the objectives, technical solutions, and advantages of this application clearer, this application is described in further detail below with reference to the accompanying drawings and embodiments. The specific embodiments described herein are merely used for explaining this application and are not intended to limit this application.

The terms "first", "second", and the like used in this application may be used for describing various concepts in this specification. However, the concepts are not limited by the terms unless otherwise specified. These terms are merely used for distinguishing a concept from another concept.

According to the terms "at least one", "a plurality of", "each", "any one", and the like used in this application, "at least one" includes one, two, or more, "a plurality of" includes two or more, "each" refers to each of a corresponding plurality of items, and "any one" refers to any one of a plurality of items.

Before the embodiments of this application are described in further detail, nouns and terms involved in the embodiments of this application are described. The nouns and terms involved in the embodiments of this application are applicable to the following explanations.
1) An extract, transform, load (ETL) tool is a key technology for data integration and data warehouse construction. An application process of the ETL tool involves three main operations: extraction (extract), transformation (transform), and loading (load). The ETL tool may help extract data from a plurality of data sources, perform necessary transformation and cleaning, and then load the data to a target data warehouse or data lake.
2) Kafka, a distributed stream processing platform, is primarily configured for constructing real-time data pipelines and streaming applications. It is designed to process a large amount of data with high throughput and low delay.
3) Pulsar, a distributed message queue system, is configured for processing large-scale message delivery and stream processing tasks.
4) A general data exchange format (GDEF) aims to provide a standardized manner to represent and exchange various types of data. This format is usually used for data transmission between different systems to ensure data consistency and readability.
5) Raft is a distributed consensus algorithm configured for managing replicated logs. It aims to address the complexity issues of early consensus algorithms in terms of understanding and implementation, with the goal of providing higher understandability and better practical applicability.

Currently, with the rapid development of information technologies, related applications have been gradually integrated into people's lives, providing people with various services. These applications may relate to various types of data transmission and processing. In some scenes, different data receiving ends need to maintain data consistency. If the received data is inconsistent, the performance of the application may be affected.

In some examples, when bank transfer and stock trading are performed in financial transaction scenes, data consistency needs to be maintained between terminal devices related to transaction data (such as a terminal device used by a trader and a terminal device of a bank system). Otherwise, fund losses or abnormal transaction records may occur. For example, in a medical information system, data such as medical visit records, diagnosis results, and treatment plans needs to be consistent among an information system of the hospital, a terminal device used by the doctor, and a terminal device used by the patient. Otherwise, misdiagnosis may occur, or the patient's condition cannot be timely understood, affecting the medical visit experience. For another example, in a social networking service, data such as account information, friend relationships, and interactive messages needs to be consistent between terminal devices of different objects. Otherwise, asymmetric or incorrect information may be propagated, affecting the interaction experience.

Therefore, in the related art, for the foregoing scenes where data consistency needs to be maintained, a data synchronization technology is usually adopted. In some examples, in some solutions, an ETL tool may be adopted for data synchronization. The ETL tool may extract data from data sources, perform necessary transformation and cleaning, and then load the data to a target data warehouse or data lake. In this application, for a scene where data consistency needs to be maintained across a plurality of data receiving ends, data that needs to be synchronized may be directly acquired from a data source, and after transformation and cleaning, the data is loaded to the plurality of data receiving ends. However, in this implementation, the data is synchronized in batches, and the transformed and cleaned data is transmitted to the data receiving ends only when it reaches a particular amount. Thus, real-time performance is poor, data processing efficiency of the data receiving ends may be affected, and network transmission resources cannot be fully utilized.

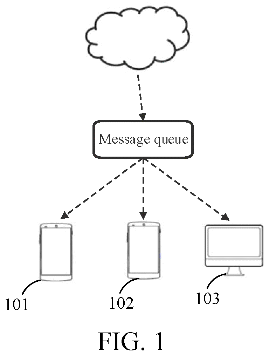

To improve data transmission and processing efficiency, some solutions adopt a real-time synchronization policy. For example, the data may be placed in a message queue. The message queue herein may be a Kafka queue, a Pulsar queue, or the like. In some examples, FIG. 1 is a schematic diagram of a data synchronization method adopted in the related art. As shown in FIG. 1, in the related art, when data is synchronized, the data may be placed in a message queue, and different data receiving ends may directly read and process the data from the message queue. The data receiving ends read data from the same message queue, ensuring data consistency. However, in actual application, it is found that some data receiving ends may have poor network transmission states and cannot acquire data in time for processing, resulting in low utilization of network transmission resources and affecting data processing efficiency.

In view of this, the embodiments of this application provide a data synchronization method and apparatus, a device, a storage medium, and a program product. The method of this application may be applied to a data transmitting end. The data transmitting end is configured for synchronously transmitting data to a plurality of data receiving ends, and pre-stores service processing logic of the data receiving ends. According to the method, target data is acquired, and for each data receiving end, a network transmission state between the data transmitting end and the data receiving end is detected to determine whether the data receiving end uses a real-time synchronization mode or a snapshot synchronization mode. For the data receiving end using the real-time synchronization mode, the target data is directly transmitted, thereby improving the efficiency of transmitting the target data to the data receiving end. For the data receiving end using the snapshot synchronization mode, the target data is pre-processed through pre-stored service processing logic corresponding to the data receiving end, and then snapshot data of a processing result is transmitted to the data receiving end, thereby improving the processing efficiency of the target data. In this application, the data synchronization mode may be adjusted with reference to the network transmission state corresponding to the data receiving end to synchronize the data to a heterogeneous system in an orderly, real-time, and reliable manner, and two synchronization modes are provided to adapt to various scenes, thereby improving the utilization of network transmission resources and improving data transmission and processing efficiency.

### Descriptions of system architecture and scenes applied by embodiments of this application

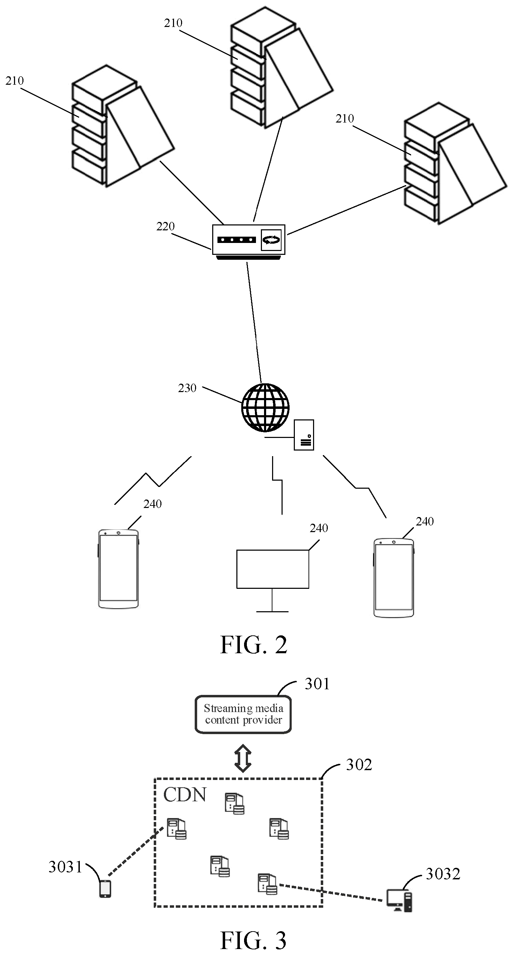

FIG. 2 is an architectural diagram of a system to which a data synchronization method is applied according to an embodiment of this application. The system includes a terminal device 240, the Internet 230, a gateway 220, a backend server 210, and the like.

In some embodiments, a related application, such as a video playback application and a shopping application, may be installed and run on the terminal device 240. The terminal device 240 may include a plurality of forms such as a desktop computer, a laptop computer, a personal digital assistant (PDA), a mobile phone, an in-vehicle terminal, a home theater terminal, and a dedicated terminal. In addition, it may be a single device or a collection of a plurality of devices. The terminal device 240 may communicate with the Internet 230 in a wired or wireless manner to exchange data.

The backend server 210 refers to a computer system that can provide some services to the terminal device 240. Compared with an ordinary terminal device 240, the backend server 210 has higher requirements in aspects such as stability, security, and performance. The backend server 210 may be a high-performance computer in a network platform, a cluster of a plurality of high-performance computers, a part (for example, a virtual machine) of a high-performance computer, a combination of parts (for example, virtual machines) of a plurality of high-performance computers, or the like.

The gateway 220 is alternatively referred to as an inter-network connector or a protocol converter. The gateway implements network interconnection on a transport layer and is a computer system or device providing a transformation function. The gateway is a translator between two systems that use different communication protocols, data formats or languages, or even completely different architectures. Meanwhile, the gateway may further provide filtering and security functions. A message transmitted by the terminal device 240 to the backend server 210 needs to be transmitted to a corresponding backend server 210 through the gateway 220. A message transmitted by the backend server 210 to the terminal device 240 also needs to be transmitted to a corresponding terminal device 240 through the gateway 220.

The data synchronization method provided in some embodiments may be locally performed at the terminal device 240 or the backend server 210, or may be performed based on interaction between the terminal device 240 and the backend server 210. The backend server 210 may be an independent physical server, may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), and a big data and artificial intelligence platform.

The data synchronization method provided in some embodiments may be performed in various scenes. This is in some examples described below.

### (1) Shopping scene

The method provided in some embodiments may be applied to a shopping application program (APP).

The shopping APP needs to ensure that data related to commodity inventory maintains consistency across a plurality of servers to avoid overselling. Alternatively, it needs to ensure that account information (such as an address or payment information) maintains consistency across a plurality of servers to prevent abnormal order situations.

When the shopping APP is used on different terminal devices, it may be well ensured that transactions are successfully performed, which is beneficial to improving the shopping experience.

### (2) Streaming media scene

The method provided in some embodiments may be applied to a streaming media APP.

The streaming media is a technology that continuously transmits audio and video content over a network, so that a terminal device may start playing a media file before downloading all data. The streaming media scene typically involves real-time or near-real-time content transmission. The content may include online videos, audio live streaming, network televisions, remote education courses, game live streaming, video conferences, and the like.

FIG. 3 is a schematic architectural diagram of a system for a streaming media service according to an embodiment of this application. As shown in FIG. 3, a streaming media content provider 301 may use a CDN 302 to deliver streaming media content, that is, caching related service data to nodes of the CDN 302. When a user wants to acquire related streaming media resources, the nearby CDN node responds to a request of the user, and feeds back the streaming media resources to the terminal device 3031 or 3032 of the user for playback and display.

To ensure real-time synchronous update of streaming media content in the CDN, the data synchronization method in some embodiments may be adopted to improve data transmission and processing efficiency as much as possible and ensure the browsing experience of the streaming media service.

The data synchronization method in some embodiments may be applied to a data transmitting end. The data transmitting end may synchronously transmit data to a plurality of data receiving ends. Herein, the plurality of data receiving ends may refer to two or more data receiving ends of any quantity. This is not limited in this application.

In some embodiments, after receiving target data that needs to be synchronized, the data receiving ends may perform corresponding service processing according to the target data. In some examples, using an e-commerce scene as an example, there are a plurality of sellers on an e-commerce platform. Each seller may upload its own commodity information to a platform system, and the platform system may present information of commodities. When a shopper logs in to the e-commerce platform for shopping, the platform system generates a piece of transaction data after an order is placed, and the transaction data is synchronized to terminal devices used by the shopper and the seller. In this case, the platform system may be used as a data transmitting end, and the terminal devices used by the shopper and the seller may be used as data receiving ends. When the transaction data is synchronized to the terminal device used by the shopper, order data may be obtained through further processing. Similarly, when the transaction data is synchronized to the terminal device used by the seller, revenue data and the like may be obtained through further processing. Therefore, each data receiving end usually has service processing logic for the target data, and the service processing logic used by different data receiving ends differs.

In some embodiments, the service processing logic for the target data in the data receiving end may be integrated into the data transmitting end. That is, the service processing logic of the data receiving end is moved forward. Accordingly, the target data may be preprocessed at the data transmitting end according to specific service processing logic of the data receiving end. When the network transmission state is poor, the data transmitting end may first pre-process the target data or some data in the target data, thereby improving data processing efficiency.

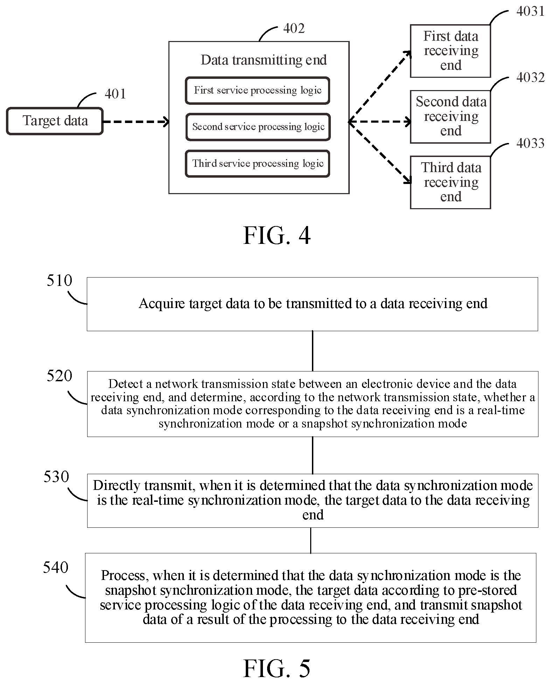

In some examples, FIG. 4 is a schematic diagram showing a relationship between a data transmitting end and a data receiving end according to an embodiment of this application. In FIG. 4, a data transmitting end 402 corresponds to three data receiving ends, which are recorded as a first data receiving end 4031, a second data receiving end 4032, and a third data receiving end 4033, respectively. The first data receiving end 4031, the second data receiving end 4032, and the third data receiving end 4033 may have any device type, and their device types may be the same or different.

Particularly, underlying systems of the first data receiving end 4031, the second data receiving end 4032, and the third data receiving end 4033 may be the same or different. When the underlying systems of the first data receiving end 4031, the second data receiving end 4032, and the third data receiving end 4033 are different, the three data receiving ends belong to heterogeneous systems.

At the data transmitting end 402, service processing logic of the first data receiving end, service processing logic of the second data receiving end, and service processing logic of the third data receiving end are pre-stored. In some embodiments, the pre-stored service processing logic of the first data receiving end is recorded as first service processing logic, the pre-stored service processing logic of the second data receiving end is recorded as second service processing logic, and the pre-stored service processing logic of the third data receiving end is recorded as third service processing logic.

In some embodiments, the service processing logic of the data receiving end that is pre-stored by the data transmitting end may be only some service processing logic of the data receiving end. For example, after receiving target data, the data receiving end performs a multi-operation service processing procedure on the target data. In some embodiments, service processing logic of the first several operations among the plurality of operations may be encapsulated and pre-stored in the data transmitting end. Accordingly, it can not only support the data transmitting end to process the task of the data receiving end, but also avoid the data transmitting end from being bloated due to pre-storing too much program code.

As described above, in some embodiments, there may be two or more data receiving ends. This is not limited to the situation shown in FIG. 4. In addition, in some embodiments, a quantity of data receiving ends corresponding to the data transmitting end may be flexible and variable. For example, in some scenes, a (or some) data receiving end may not need to receive and process the target data. In this case, these data receiving ends may be deleted from a current data synchronization task, and a quantity of data receiving ends corresponding to the data transmitting end is reduced. In other scenes, it may occur that a (or some) terminal does not belong to the data receiving end originally, but currently also needs to synchronously receive and process the target data. In this case, these terminals may be added to the current data synchronization task and used as data receiving ends corresponding to the data transmitting end. Thus, the quantity of data receiving ends is increased. This is not limited in this application.

Particularly, in some embodiments, the data transmitting end may be a single device, or may be a distributed system, including a plurality of devices, where the devices are dispersedly provided. The same applies to the data receiving end. This is not limited in this application.

FIG. 5 is a schematic flowchart of a data synchronization method according to an embodiment of this application. The method is applied to an electronic device, and the electronic device is used as the foregoing data transmitting end. As shown in FIG. 5, a data synchronization method according to an embodiment of this application includes, but is not limited to, the following operations.

Operation 510: Acquire target data to be transmitted to a data receiving end.

Operation 520: Detect a network transmission state between an electronic device and the data receiving end, and determine, according to the network transmission state, whether a data synchronization mode corresponding to the data receiving end is a real-time synchronization mode or a snapshot synchronization mode.

Operation 530: Directly transmit, when it is determined that the data synchronization mode is the real-time synchronization mode, the target data to the data receiving end.

Operation 540: process, when it is determined that the data synchronization mode is the snapshot synchronization mode, the target data according to pre-stored service processing logic of the data receiving end, and transmit snapshot data of a result of the processing to the data receiving end.

In this step, the data transmitting end may query, when it is determined that the data synchronization mode is the snapshot synchronization mode, pre-stored service processing logic of the data receiving end, process the target data according to the service processing logic, and transmit snapshot data of the processing result to the data receiving end.

In some embodiments, a data synchronization method is provided. According to this method, the data synchronization mode may be adjusted with reference to the network transmission state corresponding to the data receiving end to improve the utilization of network transmission resources as much as possible and improve data transmission and processing efficiency.

In operation 510, the target data refers to data that needs to be synchronized at the data receiving ends. In some embodiments, a data type of the target data is not limited, and may be flexibly set according to a specific application.

In some examples, in some embodiments, the target data may be structured data, for example, numerical data, which includes an integer, a floating-point number, and the like, and may be configured for representing information such as an age, a price, or a quantity. For another example, it may be text data, i.e., a character string formed by characters, for example, information such as a name, an address, or a description.

In some embodiments, the target data may be unstructured data, for example, image data, such as a photo or a video frame, or audio data, such as voice data or music data.

In some embodiments, the target data may alternatively be semi-structured data or multimodal data. Details are not described herein again in this application.

In some embodiments, specific content of the target data may be set according to an actual application scene of the data synchronization method.

In some examples, in some embodiments, when the data synchronization method in this application is applied to an e-commerce scene, the target data may include behavior data (such as a browsing history, a purchase history, and search information) of a shopper, commodity data (such as an inventory quantity, supplier information, and price data), or order data (such as an order state, delivery information, and a payment record).

In some embodiments, when the data synchronization method in this application is applied to a financial industry scene, the target data may include transaction data (such as transaction records of financial products such as stocks, bonds, and foreign exchanges), account data (such as identity information, a credit score, and an account balance), and market data (such as a market index, an interest rate change, and an economic indicator).

In some embodiments, the foregoing is merely used for exemplary description of content of the target data in some embodiments, and is not meant to limit the actual application of this application.

In operation 510, when the target data is acquired, a specific acquisition manner may be selected according to an actual requirement and a position of the target data.

In some embodiments, the target data may be acquired by database queries. For example, the target data is extracted from the database through a particular query statement (such as a structured query language (SQL) statement) or an application programming interface.

In some embodiments, the target data may be acquired by reading a related file. For example, the target data is acquired from a log file.

In some embodiments, the target data may alternatively be scraped from a website through a crawler tool, or the target data may be acquired using a third-party data service. This is not limited in this application.

In some embodiments, the action of acquiring the target data may be performed continuously or intermittently. For example, a real-time bidirectional communication protocol may be adopted to continuously acquire the target data from the data source, or a query may be transmitted at particular intervals to acquire the target data from the data source. To improve synchronization efficiency of data transmission as much as possible, the target data may be obtained by continuous execution and real-time acquisition.

Particularly, in some embodiments, the target data is synchronously transmitted to a plurality of data receiving ends. Underlying systems used by the data receiving ends may be heterogeneous systems, and data formats supported by the heterogeneous systems may be different. Therefore, in some embodiments, when a plurality of data receiving ends adopt heterogeneous systems, the target data is preprocessed to obtain general data that can be compatibly used by the heterogeneous systems.

In operation 520, the network transmission state between the data transmitting end and the data receiving end may be detected in multiple manners.

In some examples, in some embodiments, a related command may be adopted to query some indicator data of network transmission between the data transmitting end and the data receiving end. For example, a Ping command may be adopted to check a response time and a packet loss rate of the data receiving end. Specifically, a lower response time and a lower packet loss rate indicate a better network transmission state. Conversely, a higher response time and a higher packet loss rate indicate a poorer network transmission state.

In some embodiments, a network monitoring tool or a network packet capturing tool may be adopted to capture data packets transmitted between the data transmitting end and the data receiving end, so as to analyze a plurality of pieces of indicator data, such as network bandwidth, traffic, throughput within a predetermined time period, and delay. According to specific values of these indicators, the network transmission state between the data transmitting end and the data receiving end is determined.

In some embodiments, specific manners of determining the network transmission state and related indicator data are not limited to the foregoing situations. A person skilled in the art may flexibly select a determination policy according to an actual requirement. This is not limited in this application.

In some embodiments, when the network transmission state is detected, one or more types of detected indicator data may be adopted to classify a detection result into a plurality of levels. For example, n thresholds are set according to the detected indicator data, and n+1 levels may be obtained through classification. When there is one threshold, the detection result may be classified into two levels, i.e., "good" and "poor".

In some examples, the response time corresponding to the data receiving end may be detected, and a threshold may be set. If the response time exceeds the set threshold, it may be determined that the detection result of the network transmission state corresponding to the data receiving end is "poor". If the response time does not exceed the set threshold, it is determined that the detection result of the network transmission state corresponding to the data receiving end is "good".

In some embodiments, determination may alternatively be performed through a plurality of indicators, and a detection result of each indicator may be classified into two levels, i.e., "good" and "poor". Similar to the foregoing determination logic of the "response time", whether a detection result of each indicator is "good" or "poor" is determined by setting a corresponding threshold. If a particular quantity of indicators (for example, more than half) are all determined as "good", the final detection result of the network transmission state is determined as "good". Conversely, if only some indicators (for example, less than half) are determined as "good", the final detection result of the network transmission state is determined as "poor". The quantity is not limited in this application.

In operation 520, the data synchronization mode corresponding to the data receiving end may be further determined according to the determined network transmission state. In some embodiments, data synchronization modes that may be used by all data receiving ends include a real-time synchronization mode and a snapshot synchronization mode.

The real-time synchronization mode refers to transmitting the target data to the data receiving end directly after the data transmitting end acquires the target data. This mode enables rapid feedback to the data receiving end when the target data arrives at the data transmitting end, thereby ensuring the immediacy of data transmission.

The snapshot synchronization mode refers to after the data transmitting end acquires the target data, not transmitting the target data to the data receiving end directly, but transmitting the snapshot data of the target data according to a preset manner after a time period. In this mode, after arriving at the data transmitting end, the target data needs to wait for a time period before being synchronized to the data receiving end.

In some embodiments, in the real-time synchronization mode, the target data is transmitted directly upon arrival, which typically requires support of relatively high network transmission resources. That is, when the network transmission state between the data transmitting end and the data receiving end is relatively good, the target data can be rapidly transmitted to the data receiving end using the real-time synchronization mode. However, if the network transmission state between the data transmitting end and the data receiving end is relatively poor, even if the real-time synchronization mode is used, after the data transmitting end transmits the target data, the data receiving end cannot rapidly receive the target data due to limited network transmission, resulting in a waste of network transmission resources for the data transmitting end.

Therefore, in some embodiments, when the data synchronization mode corresponding to the data receiving end is determined, if the network transmission state between the data transmitting end and the data receiving end is relatively good, for example, if the foregoing detection result of the network transmission state is determined as "good", it may be determined that the data synchronization mode corresponding to the data receiving end adopts the real-time synchronization mode. Conversely, if the network transmission state between the data transmitting end and the data receiving end is relatively poor, for example, if the foregoing detection result of the network transmission state is determined as "poor", real-time synchronization may not be achieved through the real-time synchronization mode. Instead, the network transmission resources of the data transmitting end are occupied, resulting in low utilization of the network transmission resources. In this case, it is determined that the data synchronization mode corresponding to the data receiving end adopts the snapshot synchronization mode. Compared with the real-time synchronization mode, the snapshot synchronization mode has lower requirements on the network transmission resources and achieves higher utilization. It enables data synchronization by transmitting processed snapshot data, making it more suitable for a data receiving end having a relatively poor network transmission state.

In operation 530, if it is determined that the data synchronization mode corresponding to the data receiving end is the real-time synchronization mode, the target data may be directly transmitted to the data receiving end.

Specifically, in some embodiments, a data transmission protocol used by the data receiving end may be determined in advance according to a device type of the data receiving end. Then, in a case that the data synchronization mode corresponding to the data receiving end is the real-time synchronization mode, the target data is directly transmitted to the data receiving end using the corresponding data transmission protocol.

In operation 540, if it is determined that the data synchronization mode corresponding to the data receiving end is the snapshot synchronization mode, the target data is pre-processed at the data transmitting end, and a result obtained after the processing is temporarily stored and then transmitted to the data receiving end in the form of snapshots. Accordingly, the data receiving end directly uses the result obtained after the processing without performing repeated processing. Pre-processing refers to performing corresponding calculation on the target data according to the service processing logic of the data receiving end. The service processing logic may specifically be an execution script, including various calculation operations performed on the target data according to service requirements.

Specifically, pre-stored service processing logic of the data receiving end may be queried. The target data is processed through the service processing logic, and a processing result is cached. When a set transmission condition is satisfied, the cached processing result is extracted and then packaged into snapshot data in a specific format according to a snapshot data structure, and the snapshot data is transmitted to the data receiving end.

In some embodiments, the service processing logic of the data receiving ends is integrated in the data transmitting end, and the service processing logic and the data receiving end are in a one-to-one correspondence. In some embodiments, unique identification information may be pre-allocated to each data receiving end, which is recorded as a system identifier. A system identifier corresponding to each data receiving end differs. The system identifier may include at least one of digits or characters. When the service processing logic is pre-stored, the service processing logic corresponding to each data receiving end may be bound to the corresponding system identifier. Accordingly, during data synchronization, if a data synchronization mode corresponding to a data receiving end is the snapshot synchronization mode, service processing logic corresponding to the data receiving end may be determined by querying according to a system identifier corresponding to the data receiving end. Then, the target data is processed using the service processing logic.

In another embodiment, pre-processing includes parsing a format of the data according to the service processing logic of the data receiving end, and performing corresponding calculation on the parsed data. The parsing process refers to sequentially restoring the GDEF data set to the structured data defined by the data receiving end. In this case, the foregoing execution script includes a parsing script and a calculation script. The processing result refers to a result obtained after calculation is performed on the structured data defined by the data receiving end.

In operation 540, the snapshot data of the processing result may be periodically transmitted to the data receiving end. The period may be specifically set according to an actual requirement.

For example, in some embodiments, a fixed transmission period may be set. For example, the snapshot data is transmitted every 5 seconds. In some embodiments, the length of the transmission period is not limited.

In some embodiments, the transmission period may further be associated with the network transmission state corresponding to the data receiving end. For example, when the network transmission state corresponding to the data receiving end is relatively poor, the data synchronization mode corresponding to the data receiving end is the snapshot synchronization mode, and the corresponding transmission period may be further determined according to indicator data related to the network transmission state. Specifically, a functional relationship between the indicator data related to the network transmission state and the transmission period is preset. When it is determined, according to the indicator data, that the data synchronization mode is the snapshot synchronization mode, the transmission period used in the snapshot synchronization mode is determined according to the functional relationship. A poorer network transmission state corresponding to the data receiving end indicates a longer transmission period.

In some embodiments, a transmission moment may further be determined according to a data volume of the snapshot data. Specifically, when the data volume of the snapshot data reaches a preset data volume threshold, the snapshot data is transmitted to the data receiving end.

When the data synchronization method in some embodiments is performed, operation 520 may be performed continuously and in real time. That is, for each data receiving end, the corresponding network transmission state may be continuously monitored, thereby enabling the data synchronization mode to switch according to the network transmission state.

For example, in some cases, a data receiving end may be originally in the real-time synchronization mode, but when its network transmission state is currently monitored to have changed and is determined to have deteriorated from "good" to "poor" according to a threshold, a data transmission mode corresponding to the data receiving end may be switched to the snapshot synchronization mode.

In other cases, a data receiving end may be originally in the snapshot synchronization mode, but when its network transmission state is currently monitored to have changed from "poor" to "good", the data transmission mode corresponding to the data receiving end may be switched to the real-time synchronization mode.

Accordingly, the change of the network transmission states of the data receiving ends can be well adapted to, which is beneficial to improving efficiency of synchronous data transmission and utilization of the network transmission resources.

In some embodiments, operation 520 may alternatively be performed at intervals. For example, the network transmission states corresponding to the data receiving ends are detected at intervals to update the corresponding data synchronization modes. This is not limited in this application.

Particularly, in some embodiments, when the data transmission mode corresponding to the data receiving end is switched from the real-time synchronization mode to the snapshot synchronization mode, if the data receiving end fluctuates within a short time, the network transmission state is temporarily poor. Since the duration is short, the impact on real-time synchronization transmission is relatively small, and switching may not be necessary. Therefore, in some embodiments, if the detection result of the network transmission state of the data receiving end deteriorates from "excellent" to "poor", before switching, duration in which the network transmission state is "poor" may be monitored first. If the duration reaches a particular duration threshold, the data transmission mode corresponding to the data receiving end is switched to the snapshot synchronization mode; otherwise, the real-time synchronization mode may be maintained.

In addition, in some embodiments, when the data transmission mode corresponding to the data receiving end is switched, to prevent data disorder, switching may be performed after a current synchronization task in a previous data transmission mode is completed.

The data synchronization method provided in some embodiments may be applied to the data transmitting end. The data transmitting end is configured for synchronously transmitting data to a plurality of data receiving ends, and pre-stores the service processing logic of the data receiving ends. According to the method, the target data is acquired, and for each data receiving end, the network transmission state between the data transmitting end and the data receiving end is detected to determine whether the data receiving end uses the real-time synchronization mode or the snapshot synchronization mode. For the data receiving end using the real-time synchronization mode, the target data is directly transmitted, thereby improving the efficiency of transmitting the target data to the data receiving end. For the data receiving end using the snapshot synchronization mode, the target data is pre-processed through pre-stored service processing logic corresponding to the data receiving end, and then snapshot data of a processing result is transmitted to the data receiving end, thereby improving the processing efficiency of the target data by the data receiving end. In this application, the data synchronization mode may be adjusted with reference to the network transmission state corresponding to the data receiving end to improve the utilization of the network transmission resources as much as possible and improve data transmission and processing efficiency.

Specifically, in some embodiments, after acquiring the target data, the method in some embodiments further includes:

transforming the target data into a plurality of log entries, and determining a log index corresponding to each of the plurality of log entries.

In some embodiments, the target data may include a relatively large amount of data content. To facilitate sequential and complete transmission of the target data to the data receiving end, in some embodiments, the target data may be transformed into log entries according to a data structure of a linked list.

In some embodiments, the target data may include a plurality of service-related records. For example, the target data is configured for recording data of interaction operations, and each record may include at least one of the following fields: an identification, a timestamp, an operation account, an operation type, detailed information, and the like. Each record may be transformed into a log entry. The log entry includes all content of the record, and may be a simple piece of text line data. Accordingly, the target data may be split and transformed into a plurality of log entries, and a specific quantity of log entries corresponding to the plurality of log entries is not limited in this application.

In some embodiments, the target data may be transformed into the log entries according to the data structure of the linked list. The linked list is a linear data structure, including a plurality of elements (nodes). Each element contains a link pointing to a next element in the linked list. Each element includes two parts: a data field and a pointer field. The data field stores a specific log entry, and the pointer field points to a next log entry. When the log entry is organized according to the data structure of the linked list, the log index corresponding to each log entry may be determined according to sorting of records corresponding to the log entry in the target data.

In some embodiments, the log index is unique identification information allocated to each log entry, and different log entries correspond to different log indexes. In some examples, the log index may include at least one of digits or characters.

In some embodiments, each record in the target data includes a timestamp. Therefore, when the log index corresponding to each log entry is determined according to sorting of the records in the target data, the log entry corresponding to the records may be sorted according to the size of the timestamp, and then the log index of each log entry is generated by incrementing the value from 0.

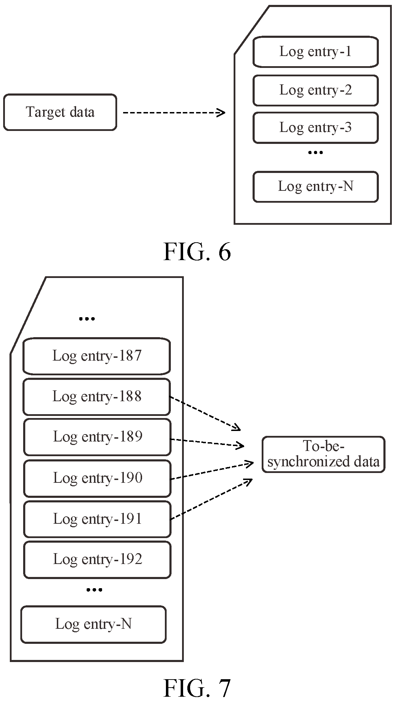

In some examples, FIG. 6 is a schematic diagram of transforming target data into log entries according to an embodiment of this application. In some embodiments, the target data includes a plurality of records. Log entry obtained by transforming each record may be sorted according to sorting of the record in the target data, and a log index is allocated to each log entry. As shown in FIG. 6, log indexes corresponding to the log entries may be numbered using digits, incrementing sequentially from 1. For example, in FIG. 6, the log indexes corresponding to the log entries are 1, 2, 3, ..., N (N is a positive integer), respectively. When a quantity of records contained in the target data is relatively large, the log indexes corresponding to the log entries may be sorted one by one according to the foregoing numbers. A specific value of the log index is not limited in this application.

In some embodiments, the records in the target data are transformed into the log entry one by one, so that the log entry may be conveniently indexed and marked according to the sorting of the records. Subsequently, when the log entry is transmitted to the data receiving end, the sorting of data may be determined according to the log index, thereby facilitating sequential and complete synchronization of the target data to the data receiving end for processing.

Specifically, in some embodiments, the directly transmitting, when it is determined that the data synchronization mode is the real-time synchronization mode, the target data to the data receiving end includes:
acquiring a system identifier of the data receiving end;
extracting, from the plurality of log entries and according to the log index, a first quantity of log entries as a current batch of to-be-synchronized entries;
querying a first log index corresponding to a first log entry at a tail position in the first quantity of log entries; and
transmitting the system identifier, the current batch of to-be-synchronized entries, and the first log index to the data receiving end.

In some embodiments, "real-time" in the real-time synchronization mode refers to being transmitted directly, while synchronized data may be processed in a plurality of batches. Specifically, some log entry may be extracted from a plurality of consecutive log entries according to the log index and used as the current batch of to-be-synchronized entries.

Herein, when the to-be-synchronized data is extracted, to ensure that the data can be completely and orderly transmitted to the data receiving end, the log entry may be extracted according to consecutive log indexes.

In some examples, FIG. 7 is a schematic diagram of extracting to-be-synchronized data according to an embodiment of this application. As shown in FIG. 7, log indexes corresponding to the log entries include some log indexes whose values are 187 to 192. Assuming that to-be-synchronized data currently needs to be extracted, a log index corresponding to the first extracted log entry may be first determined. For example, extraction is started from log entry whose corresponding log index is 188. Then, a log entry whose corresponding log index is 189, a log entry whose corresponding log index is 190, and the like may be continuously extracted subsequently until a total quantity of extracted log entries reaches a quantity of log entries corresponding to the current batch. Accordingly, the extracted log entries are used as the current batch of to-be-synchronized entries. As shown in FIG. 7, it is preset that four log entries are extracted in the current batch to form the to-be-synchronized data, and the extracted log entries are log entries whose corresponding log indexes are 188, 189, 190, and 191.

In some embodiments, after the to-be-synchronized data is obtained through extraction, a log index corresponding to a log entry at a tail position in the to-be-synchronized data may be queried and recorded as a first log index. In some examples, referring to FIG. 7, in the current batch of to-be-synchronized entries obtained through extraction, the log index corresponding to the log entry at the tail position is 191. Therefore, the first log index corresponding to the current batch is 191.

In addition, in some embodiments, a system identifier of the data receiving end (i.e., the foregoing identification information of the data receiving end) may further be acquired, and then the system identifier, the to-be-synchronized data, and the first log index may be transmitted to the data receiving end.

After receiving the system identifier, the to-be-synchronized data, and the first log index, the data receiving end may perform data synchronization based on the data. Specifically, the data receiving end may check, according to the system identifier, whether the received data is correct, that is, whether it is the data corresponding to the data receiving end. Specifically, the received system identifier may be matched against the locally stored system identifier. If the two match, the received data is correct, and synchronization may be continued. If the two do not match, the data receiving end receives incorrectly transmitted data. In this case, synchronization on the currently received to-be-synchronized data may be rejected.

During data synchronization, the data receiving end may also record a log index in real time. The log index is a log index corresponding to a log entry at a tail position in a batch of to-be-synchronized entries synchronized by the data receiving end, and is recorded as a second log index. Each time a batch of to-be-synchronized entries is synchronized, the data receiving end may update the second log index according to the batch of to-be-synchronized entries. In addition, after updating the second log index each time, the data receiving end may feed back the updated second log index to the data transmitting end, so that the data transmitting end learns a data synchronization process of the data receiving end.

In some embodiments, after receiving the system identifier, the to-be-synchronized data, and the first log index, the data receiving end may further compare the first log index with the second log index. If the first log index is greater than the second log index, the currently received to-be-synchronized data is new data and has not been synchronized yet, so that the to-be-synchronized data may be normally processed. Conversely, if the first log index is less than or equal to the second log index, the currently received to-be-synchronized data has been synchronized previously. In this case, synchronization on the currently received to-be-synchronized data may be rejected.

Specifically, in some embodiments, extracting several log entries as the current batch of to-be-synchronized entries according to the log index includes:
querying a second log index most recently fed back by the data receiving end, the second log index indicating a second log entry at a tail position in a batch of log entries synchronized by the data receiving end; and
extracting, starting from a log entry following the second log entry, the first quantity of log entries as the current batch of to-be-synchronized entries.

In some embodiments, during data synchronization, the data receiving end may record the second log index in real time. The second log index is a log index corresponding to a log entry at a tail position in a batch of data synchronized by the data receiving end. The log index may be configured for recording a data synchronization process of the data receiving end. Each time a batch of data is synchronized, the data receiving end may update the currently recorded second log index, and transmit the second log index to the data receiving end. Accordingly, it is further convenient for the data receiving end to determine each batch of to-be-synchronized entries.

Specifically, in some embodiments, when extracting the current batch of to-be-synchronized entries, the data receiving end may query a second log index most recently fed back by the data receiving end, thereby learning which log entry is most recently synchronized by the data receiving end. Then, starting from a next log entry after second log entry corresponding to the second log index that is most recently fed back, a first quantity of log entries may be extracted as the current batch of to-be-synchronized entries.

In some examples, it is assumed that log indexes corresponding to the log entries transformed from the target data include some log indexes whose values are 187 to 220. When determining a current batch of to-be-synchronized entries corresponding to a data receiving end, the data transmitting end finds that the second log index most recently fed back by the data receiving end is 196. Then, starting from log entry whose corresponding log index is 197, the first quantity of log entries may be extracted and used as the current batch of to-be-synchronized entries corresponding to the data receiving end.

In some embodiments, the first quantity may be a preset fixed value. For example, it may be set to 4. Therefore, the extracted to-be-synchronized data includes log entry whose log indexes are 197, 198, 199, and 200.

In some embodiments, for the data receiving ends, their respective synchronization efficiency may differ. Therefore, the second log index fed back by each data receiving end may differ. In some embodiments, the second log index for feedback to the data transmitting end may be recorded and maintained at the data receiving end. When receiving the second log index fed back by the data receiving end, the data transmitting end updates the previous second log index according to the corresponding system identifier. When the to-be-synchronized data is transmitted to the data receiving end, the to-be-synchronized data is further extracted according to the corresponding second log index.

In some embodiments, the to-be-synchronized data is extracted through the second log index, so that data synchronization can be better performed with reference to the synchronization process of the data receiving end, a probability of repeated transmission of data can be reduced, the utilization of the network transmission resources can be improved, and data transmission and processing efficiency can be improved.

In some embodiments, the first quantity may alternatively be determined according to the pressure situation of performing the data synchronization task by the current data transmitting end. Specifically, the first quantity is determined through the following operations:
detecting a second quantity of data receiving ends that are performing data synchronization at a current moment, and a third quantity of data synchronization requests received from a data source within a first preset time period before the current moment; and
determining the first quantity according to the second quantity and the third quantity,
the first quantity being negatively correlated with the second quantity, and the first quantity is negatively correlated with the third quantity.

If the current data transmitting end has relatively little pressure to perform the data synchronization task, the quantity of pieces of to-be-synchronized data transmitted in each batch may be smaller, and a quantity of transmissions may be greater, so that the target data may be rapidly synchronized to the data receiving end. Conversely, if the current data transmitting end has relatively large pressure to perform the data synchronization task, the quantity of pieces of to-be-synchronized data transmitted in each batch may be greater, and the quantity of transmissions may be smaller, so that the data transmission pressure of the data transmitting end can be alleviated.

When the pressure of the data synchronization task of the data transmitting end is evaluated, a quantity of data receiving ends that are performing data synchronization at the current moment may be detected and recorded as the second quantity. The second quantity may be configured for measuring the pressure at the current moment. Meanwhile, in some embodiments, the pressure of the data synchronization task within a recent time period may further be considered. For example, a quantity of data synchronization requests received within a first preset time period before the current moment may be detected and recorded as the third quantity. The data synchronization request herein may be transmitted from an upstream data source. Each time new target data is transmitted to the data transmitting end, a data synchronization request is triggered for requesting the data transmitting end to perform a data synchronization task for the target data. The length of the first preset time period set in some embodiments may be determined according to an actual requirement. This is not limited in this application.

In some embodiments, a larger second quantity indicates a larger quantity of data receiving ends to which the current data transmitting end needs to be connected, and a larger pressure of the data synchronization task. A larger third quantity indicates a larger quantity of pieces of target data that needs to be transmitted by the data transmitting end within a recent time period, and similarly, a larger pressure of the data synchronization task.

Therefore, in some embodiments, the first quantity may be determined according to the second quantity and the third quantity. A larger second quantity and a larger third quantity indicate a smaller determined first quantity. A smaller second quantity and a smaller third quantity indicate a larger first quantity. That is, the first quantity is in a negative correlation with the second quantity, and is also in a negative correlation with the third quantity. The first quantity may be 1 or any integer greater than 1. A specific functional relationship between them is not limited in this application.

In some embodiments, the first quantity is flexibly determined based on the second quantity and the third quantity, so as to conveniently adjust the to-be-synchronized data transmitted in each batch. Thus, when the pressure of the data synchronization task of the data transmitting end is relatively small, the data transmission efficiency is improved. When the pressure of the data synchronization task of the data transmitting end is relatively large, the transmission frequency is appropriately reduced, thereby alleviating the data transmission pressure of the data transmitting end.

Specifically, in some embodiments, the method in some embodiments further includes:
recording a first moment when transmitting the current batch of to-be-synchronized entries to the data receiving end;
extracting, when a second log index corresponding to the current batch is received from the data receiving end within a second preset time period after the first moment, a next batch of to-be-synchronized entries from the plurality of log entries and according to the second log index; and
re-transmitting, when the second log index is not received from the data receiving end within the second preset time period, the current batch of to-be-synchronized entries to the data receiving end.

As described above, in some embodiments, during data synchronization, the data receiving end may record the second log index in real time. The second log index is a log index corresponding to a log entry at a tail position in a batch of data synchronized by the data receiving end. The log index may be configured for recording a data synchronization process of the data receiving end.

In some embodiments, after the data transmitting end transmits the to-be-synchronized data transmitted in each batch to the data receiving end, a transmission moment of a current batch of to-be-synchronized entries may be recorded. In some embodiments, the transmission moment is recorded as the first moment. Then, whether the second log index corresponding to the current batch is received may be monitored in real time. Herein, when monitoring that the second log index corresponding to the current batch is received, the received second log index may be matched against the first log index of the current batch. If it is found that the received second log index is the same as the first log index of the current batch, the received second log index corresponds to the current batch.

In some embodiments, after the current batch of to-be-synchronized entries is transmitted to the data receiving end, in normal cases, the data receiving end quickly receives the to-be-synchronized data and completes data synchronization of the current batch of to-be-synchronized entries. Therefore, the data transmitting end may receive the second log index corresponding to the current batch in a short time. If the data transmitting end fails to receive the second log index corresponding to the current batch for a long time, a problem may occur in the data transmission process, and the current batch of to-be-synchronized entries is not normally transmitted to the data receiving end. Alternatively, the data receiving end may be faulty, and a data synchronization task cannot be normally completed. In some embodiments, a preset time period may be set and recorded as the second preset time period. The duration of the second preset time period may be relatively short. The specific duration of the second preset time period is not limited in this application.

For a set second preset time period, duration accumulation may be performed at the first moment. If, after the first moment, the data transmitting end receives the second log index corresponding to the current batch before the accumulated duration reaches the second preset time period, the data receiving end normally receives the to-be-synchronized data and completes data synchronization of the current batch of to-be-synchronized entries. In this case, the next batch of to-be-synchronized entries may be continuously extracted according to the second log index of the current batch. Specific extraction logic is described in the foregoing embodiments, and details are not described herein again.

Conversely, if the accumulated duration reaches the second preset time period, but the second log index corresponding to the current batch is not received yet, a problem may exist in data transmission or data synchronization of the current batch of to-be-synchronized entries. In this case, the current batch of to-be-synchronized entries may be re-transmitted to the data receiving end to ensure reliability and stability of data transmission.

In some embodiments, in the real-time synchronization mode, an upper limit for a quantity of retransmissions may be preset. For each batch of to-be-synchronized entries, if the corresponding second log index is not received after multiple retransmissions, the network transmission state between the data transmitting end and the data receiving end may be abnormal, or the data receiving end may be faulty. In this case, to reduce the waste of the network transmission resources, the data synchronization mode corresponding to the data receiving end may be adjusted to the snapshot synchronization mode. In some embodiments, the upper limit for the quantity of retransmissions may be flexibly set according to an actual requirement.

Specifically, in some embodiments, the processing the target data according to the service processing logic, and transmitting snapshot data of a result of the processing to the data receiving end includes:
acquiring a system identifier of the data receiving end;
processing the plurality of log entries according to the service processing logic to obtain the result; and
when a data volume of the result that has not been transmitted reaches a preset capacity threshold, or duration after last snapshot data is transmitted reaches a preset duration threshold,
   querying a third log index corresponding to a last log entry that is currently processed;
   packaging, based on a preset snapshot data structure, the result that has not been transmitted into to-be-transmitted snapshot data; and
   transmitting the system identifier, the to-be-transmitted snapshot data, and the third log index to the data receiving end.

In some embodiments, for the snapshot synchronization mode, the target data may alternatively be transmitted in the form of log entries. Each log entry may be pre-processed using the service processing logic of the data receiving end to obtain and cache a corresponding processing result. Then, the to-be-transmitted snapshot data may be transmitted periodically or quantitatively. For example, a duration threshold may be preset. If the duration since the last snapshot data transmission reaches the preset duration threshold, the snapshot data may be transmitted to the data receiving end. Alternatively, a capacity threshold may be preset. When a data volume (corresponding to one or more log entries) of the to-be-transmitted processing result accumulates to the preset capacity threshold, the snapshot data is transmitted to the data receiving end.

In some embodiments, the system identifier of the data receiving end may further be acquired, to facilitate verification and synchronization of the received data by the data receiving end, thereby improving the reliability of data synchronization. When the snapshot data is transmitted, the third log index corresponding to the last log entry that is currently processed may be queried, and the to-be-transmitted snapshot data, the system identifier, and the third log index are transmitted together to the data receiving end. The to-be-transmitted snapshot data corresponds to one or more log entries.

In some embodiments, for the snapshot synchronization mode, the data receiving end may also maintain an index, which is recorded as a fourth log index. The fourth log index may represent a log index corresponding to a log entry at a tail position in a batch of snapshot data synchronized by the data receiving end. In addition, the fourth log index may be fed back to the data transmitting end. Accordingly, the data transmitting end may determine, according to the fourth log index fed back by the data receiving end, processing results (which may be all unsynchronized processing results) of which log entries are transmitted subsequently. In addition, at the data receiving end, a relationship between the third log index and the fourth log index may further be compared. When the third log index is less than or equal to the fourth log index, the received snapshot data is synchronized, and currently received snapshot data may not be used for synchronization.

In some embodiments, when the processing result is transmitted, the processing results corresponding to the plurality of log entries may be packaged into snapshot data in a specific format to improve the data transmission efficiency. The data transmitting end obtains the preset snapshot data structure based on the system identifier of the data receiving end, and packages, according to the snapshot data structure, a plurality of processing results that have not been transmitted, to obtain the snapshot data transmitted to the data receiving end.

In some embodiments, the processing result is generated through processing according to an order of the log entries. Therefore, the obtained snapshot data has integrity, which may be conveniently used by the data receiving end, thereby improving the data synchronization and processing efficiency.

Specifically, in some embodiments, detecting the network transmission state between the electronic device and the data receiving end includes:
detecting network environment parameters between the electronic device and the data receiving end.

The determining, according to the network transmission state, whether a data synchronization mode corresponding to the data receiving end is a real-time synchronization mode or a snapshot synchronization mode includes:
determining a network quality score corresponding to the data receiving end according to the network environment parameters;
determining, when the network quality score is greater than a preset score threshold, that the data synchronization mode corresponding to the data receiving end is the real-time synchronization mode; and
determining, when the network quality score is less than or equal to the preset score threshold, that the data synchronization mode corresponding to the data receiving end is the snapshot synchronization mode.

In some embodiments, the network environment parameters may include, but are not limited to, parameters such as a retransmission ratio (retran_ratio) of a session connection between the data transmitting end and the data receiving end, a quantity of retransmitted data packets due to timeout (retransmit_timeout_packets), a quantity of retransmitted transaction layer packets (TLPs), a round-trip time (RTT) of network transmission, a maximum window (max_cwnd), a packet loss rate (loss_rate), and throughput (goodput). The RTT may further include types such as a minimum RTT (min_rtt), a smooth RTT (srtt), and a maximum RTT (max_rtt). These network environment parameters may be values at the current moment, or may be determined according to values within a predetermined time period before the current moment. This is not limited in this application.

In some embodiments, the magnitude of the network quality score is positively correlated with the stability of a network environment of the session connection between the data transmitting end and the data receiving end. If the network environment of the session connection fluctuates significantly and the transmission effect is poor, it may be determined that the value of the network quality score corresponding to the data receiving end is relatively low. If the network environment of the session connection fluctuates slightly and the transmission effect is good, it may be determined that the value of the network quality score corresponding to the data receiving end is relatively high. In some embodiments, a specific functional relationship between the network environment parameter and the network quality score is not limited. Specifically, multiple different types of parameters may be combined to determine the network quality score corresponding to the data receiving end through weighting.

After the network quality score corresponding to the data receiving end is obtained, the data synchronization mode used by the data receiving end may be determined according to the network quality score. For example, a score threshold may be preset. If the network quality score is greater than the preset score threshold, the network environment is relatively good, and it may be determined that the data synchronization mode corresponding to the data receiving end is the real-time synchronization mode. Conversely, if the network quality score is less than or equal to the preset score threshold, the network environment is relatively poor, and it may be determined that the data synchronization mode corresponding to the data receiving end is the snapshot synchronization mode.

In some embodiments, the data synchronization mode corresponding to the data receiving end is determined in combination with the network environment parameters between the data transmitting end and the data receiving end, so that the utilization of the network transmission resources may be improved, the limited data transmission capability of the data transmitting end may be more efficiently used, resulting in relatively good applicability of the data synchronization mode to the data receiving end.

Specifically, in some embodiments, the data transmitting end is a distributed source data system, the distributed source data system includes a master node and a plurality of slave nodes, and the master node is configured for synchronously transmitting data to a plurality of data receiving ends.

The acquiring target data to be transmitted to a data receiving end includes:
acquiring original data through the master node, and transforming the original data to obtain standard data conforming to a GDEF; and
transmitting the standard data to the slave nodes through the master node, performing consensus on the standard data through the slave nodes, and determining the standard data after the consensus is achieved as the target data.

In some embodiments, in some scenes, the data transmitting end may adopt a distributed source data system. The distributed source data system may include a plurality of nodes, specifically, a master node and a plurality of slave nodes. The master node may be configured for synchronously transmitting data to a plurality of data receiving ends, and the slave nodes may be used as standby nodes. When the master node is faulty, the slave node may be switched to for operation, thereby improving the reliability and stability of data synchronization.

For the foregoing implementation in which the data transmitting end adopts the distributed source data system, related data needs to be backed up at the slave node. For the target data, original data may first be acquired through the master node. The original data may be of any data type. Then, format transformation may be performed on the original data through the master node to obtain standard data belonging to the GDEF. The standard data may be applicable to various different systems to ensure the consistency and readability of the data.

In some embodiments, after the standard data is obtained, the standard data may be delivered to the slave nodes for backup and consensus. After the slave nodes complete consensus on the standard data, the standard data may be used as the target data and synchronously transmitted to the data receiving ends.

Specifically, in some embodiments, the transmitting the standard data to the slave nodes through the master node, and performing consensus on the standard data through the slave nodes includes:
hashing the standard data through the master node to obtain a first hash value; and transmitting the standard data and the first hash value to the slave nodes;
for each of the slave nodes, hashing the standard data to obtain a second hash value, and checking consistency between the first hash value and the second hash value to obtain a consistency check result corresponding to the standard data; and
determining, when consistency check results of more than half of the slave nodes indicate that the consensus is achieved, that the consensus is achieved for the standard data.

In some embodiments, when consensus is performed on the standard data, the master node may hash the standard data to obtain a hash value through calculation, which is recorded as the first hash value. Then, the master node may transmit the standard data and the first hash value to the slave nodes, and the slave nodes may perform, as consensus nodes, consistency verification on the standard data.

Specifically, when performing consistency verification on the standard data, the slave nodes may further hash the standard data to obtain a hash value through calculation, which is recorded as the second hash value. Then, the first hash value may be compared with the second hash value. If the first hash value is the same as the second hash value, consistency verification succeeds, and the slave nodes generate and feed back corresponding consensus signatures. The master node may receive and accumulate a quantity of consensus signatures returned by the slave nodes. When the total quantity reaches a particular quantity (which is generally more than half of the quantity of slave nodes), it may be determined that the consensus of the standard data succeeds. In some embodiments, a type of a specifically used hash algorithm is not limited.

In some embodiments, the data synchronization task is processed through the distributed source data system, and data may be backed up through a consensus mechanism, to prevent single points of failure. Accordingly, reliability and stability of data synchronization may be improved.

Specifically, in some embodiments, the data transmitting end is a distributed source data system, the distributed source data system includes a master node and a plurality of slave nodes, and the master node is configured for synchronously transmitting data to a plurality of data receiving ends. The method in some embodiments further includes:
synchronizing data in the master node to the slave nodes;
detecting an operating state of the distributed source data system;
determining, when the operating state indicates that the master node needs to be switched, a new master node from the slave nodes;
detecting whether an uncompleted data synchronization task exists in an old master node, the uncompleted data synchronization task indicating that to-be-synchronized data has been transmitted but a log index is not received from the data receiving end afterwards; and
stopping transmitting, when the uncompleted data synchronization task exists in the old master node, new to-be-synchronized data through the old master node, waiting until the log index is received from the data receiving end, or waiting for a timeout, and switching from the old master node to the new master node.

In some embodiments, for the foregoing implementation in which the data transmitting end adopts the distributed source data system, data in the master node may be synchronized to the slave nodes, for example, the target data (i.e., the foregoing standard data after the consensus) and the log index fed back by the data receiving end. During the execution of the data synchronization task, the operating state of the distributed source data system may be detected. If it is found that the current master node is faulty, or the master node needs to be switched to due to factors such as load balancing, one of the slave nodes may be selected as a new master node.

The master node of the distributed source data system may be switched at any time. Therefore, to better coordinate the data synchronization task in the switching process, in some embodiments, after the new master node is determined, if the old master node can run normally, whether an uncompleted data synchronization task exists in the old master node may be further detected. For the real-time synchronization mode, the uncompleted data synchronization task may include a data synchronization task where the to-be-synchronized data has been transmitted but the second log index fed back by the data receiving end has not been received. For the snapshot synchronization mode, the uncompleted data synchronization task may include a data synchronization task where the snapshot data has been transmitted but the fourth log index fed back by the data receiving end has not been received. If there is an uncompleted data synchronization task, the master node may not be switched temporarily, but the old master node is not allowed to transmit new to-be-synchronized data (and snapshot data). After waiting until the log index fed back by the data receiving end is received, or waiting for a timeout, a switching action may be performed. After the switching, the new master node may be normally adopted to synchronously transmit data. Accordingly, this may prevent the new and old master nodes from simultaneously transmitting the to-be-synchronized data (and snapshot data), thereby reducing the probability of data transmission disorder and improving the utilization of the network transmission resources.

In some embodiments, if the old master node cannot run normally due to factors such as a fault, or the old master node does not have an uncompleted data synchronization task, the old master node may be directly switched to the new master node for synchronous data transmission.

The data synchronization method provided in some embodiments is introduced and described below with reference to specific application embodiments.

The data synchronization method in some embodiments may be applied to a distributed source data system built based on a raft algorithm. In some embodiments, the distributed source data system may be recorded as an RSS.

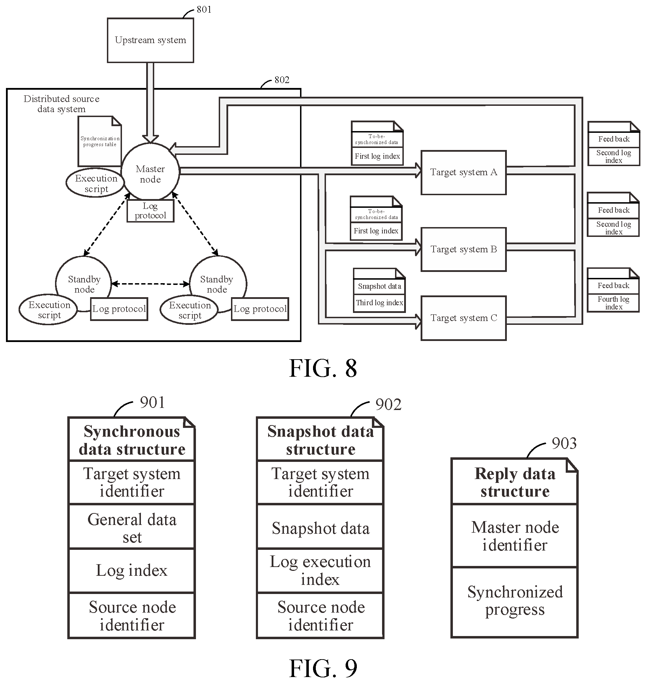

In some examples, FIG. 8 is a schematic diagram of an application principle of an RSS according to an embodiment of this application. In some embodiments, a distributed source data system 802 may include a master node and several standby nodes (i.e., slave nodes). FIG. 8 shows two standby nodes. Alternatively, there may be one, two, or any other quantity of standby nodes. This is not limited in this application. A raft protocol may be run between the master node and the standby node. The master node is primarily responsible for receiving and synchronizing data. The standby node may perform consensus and backup on the data, and may be switched to serve as a new master node for use when appropriate.

In FIG. 8, the distributed source data system 802 is used as the data transmitting end, and data receiving ends are some downstream systems. In some embodiments, these systems may be recorded as target systems. In FIG. 8, three data receiving ends are included, which are a target system A, a target system B, and a target system C, respectively. In some embodiments, different synchronization modes, i.e., a real-time synchronization mode and a snapshot synchronization mode, are provided for the data receiving ends according to network transmission states between the data receiving ends and the distributed source data system 802.

After receiving the data transmitted by the distributed source data system 802, the target systems check whether the data is valid, for example, check whether system identifiers match themselves and whether a pushing progress is consistent with a current synchronization process. If the data is valid, the data is received and processed.

Using the real-time synchronization mode as an example, when data from an upstream system 801 is transmitted to the distributed source data system 802, first, the data transmitted by the upstream system 801 is received by the master node, and the master node may perform format transformation on the data to obtain standard data, for example, having the foregoing GDEF format. Then, the standard data is transmitted to the standby nodes for consensus. Based on the raft protocol, it may be ensured that more than half of the standby nodes place the standard data into logs of the standby nodes. The master node and the standby node store data in a log format. After the standard data passes the consensus verification, the standard data may be used as target data for transmission in the real-time synchronization mode, and then transmitted to the target system. The target system may parse the target data into data in a format defined by the system itself, and then process the data. As shown in FIG. 8, the target system A and the target system B use the real-time synchronization mode.

In the snapshot synchronization mode, service processing logic corresponding to the target systems may be encapsulated into an execution script and injected into the master node and the standby nodes of the distributed source data system 802. Data transmitted by the upstream system 801 may be directly pre-processed on the master node through the service processing logic, and does not need to be transformed into standard data. Data processed by the master node may be periodically or quantitatively packaged and stored, and transmitted to the target system as snapshot data. As shown in FIG. 8, the target system C uses the snapshot synchronization mode.

In some embodiments, the target system may feed back its synchronization progress to the distributed source data system. As in the foregoing embodiment, a current synchronization progress is informed using the second log index and the fourth log index. In some embodiments, the distributed source data system may maintain a synchronization progress table to store the indexes. Once feedback from a target system is received, the synchronization progress table is updated, and the information is simultaneously transmitted to the standby node. The synchronization progress of each target system is independent, and in the distributed source data system, all data after the lowest progress may be reserved.

FIG. 9 is a schematic diagram of various transmitted data structures according to an embodiment of this application. In some embodiments, a data structure transmitted in the real-time synchronization mode is recorded as a synchronous data structure 901, a data structure transmitted in the snapshot synchronization mode is recorded as a snapshot data structure 902, and a data structure fed back by the target system to the distributed source data system is recorded as a reply data structure 903. These structures are described one by one below.

Referring to FIG. 9, in the real-time synchronization mode, each time the master node in the distributed source data system transmits to-be-synchronized data to the target system, an overall data structure may include a target system identifier (Target-ID), a general data set (GDEF-Set), a log index (Last-Index), and a source node identifier (From-RSS-ID). The target system identifier may be used by the target system to query whether the transmitted data matches a local identifier, and if the transmitted data does not match the local identifier, the data may be rejected. The general data set (i.e., to-be-synchronized data) may be extracted and combined from log entries, and may be configured for data synchronization of the target system. The log index (i.e., first log index) is configured for identifying an index of a log entry at a tail of the general data set, and may represent a pushing progress of the general data set. After receiving the data, the target system may check whether the data is greater than a log index in a previous batch of transmitted data. If not, the target system may reject the data and reply to the distributed source data system that the target system has received a maximum log index. The source node identifier may identify a node in the distributed source data system that transmits data.

In the snapshot synchronization mode, each time the master node in the distributed source data system transmits snapshot data to the target system, an overall data structure may include a target system identifier (Target-ID), snapshot data (Snap), a log execution index (Exec-Index), and a source node identifier (From-RSS-ID). Meanings of the target system identifier and the source node identifier are the same as those described above, and details are not described herein again. The snapshot data is obtained by pre-processing log entries and performing snapshot formatting on a generated processing result. The log execution index (i.e., third log index) is configured for identifying an index corresponding to a log entry at a tail of the snapshot data, and may represent a pushing progress of the snapshot data.

The reply data structure 903 fed back by the target system to the distributed source data system includes a master node identifier (To-RSS-ID) and a synchronized progress (Finish-Index). The master node identifier is configured for replying to a specified node. If a plurality of pieces of to-be-synchronized data or snapshot data are received, multiple replies are required. The master node identifier may change during the switching of the master node. The synchronized progress is configured for replying to an index corresponding to currently synchronized log entry or snapshot data. When the target system uses the real-time synchronization mode, an index (i.e., the second log index) of the synchronized log entry is fed back. When the target system uses the snapshot synchronization mode, an index (i.e., the fourth log index) corresponding to the synchronized snapshot data is fed back. When receiving the synchronized progress, the distributed source data system may use a maximum index as an updated synchronized progress.

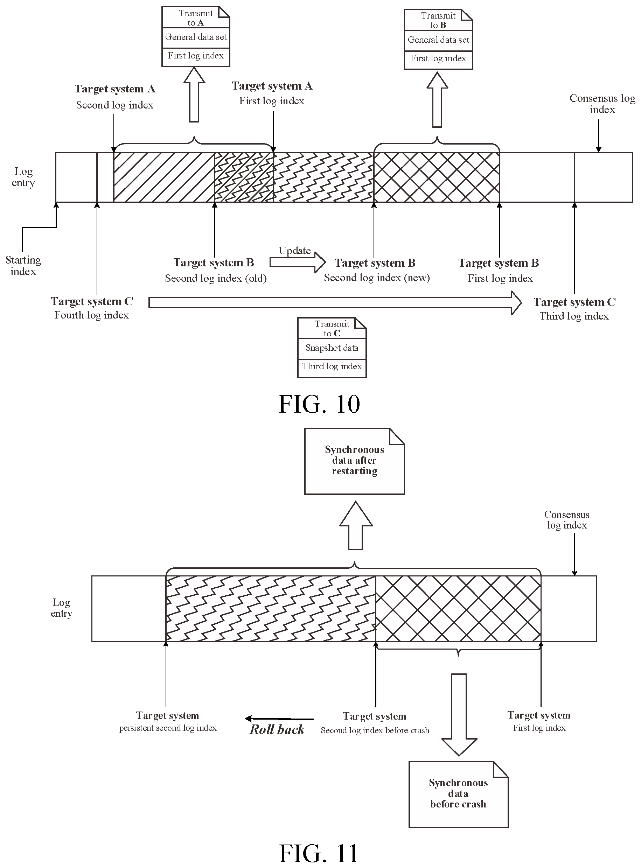

FIG. 10 is a schematic diagram of a principle of data synchronization according to an embodiment of this application. As shown in FIG. 10, after data is transmitted to the distributed source data system through the upstream system, corresponding log entry is generated. The log entry is stored in a linked list structure that is continuously appended at the tail, continuously expanding backward from the starting index position. In some embodiments, a consensus log index (Commit-Index) may be marked, which may record a position of the last log entry for which consensus has been currently completed in a linked list structure.

In some embodiments, in the real-time synchronization mode, the master node maintains two indexes for each target system, i.e., a first log index (the foregoing log index (Last-Index)) and a second log index (the foregoing synchronized progress (Finish-Index) in the real-time synchronization mode). The initial values are all starting indexes 0, and a generation procedure of the synchronous data structure 901 is as follows.

Operation 1a): Move a first log index corresponding to a target system to a threshold. The threshold may be an index of several bits after a second log index and needs to be less than or equal to a consensus log index.

Operation 2a): Take all log entry within an interval (second log index, first log index] (where left is open and right is closed), and read the log entry one by one to obtain a general data set.

Operation 3a): Assemble the target system identifier, the general data set, the log index, and the source node identifier to obtain a synchronous data structure 901.

For the target system A shown in FIG. 10, after a position of a current second log index of the target system A is determined, a position of the first log index is determined according to a set quantity. Then, starting from a next log entry after the log entry corresponding to the second log index and ending at the position corresponding to the first log index, the log entry is extracted as a current batch of to-be-synchronized entries and transmitted to the target system A. The set quantity herein may be determined according to the data transmission pressure of the master node. Different target systems may be in different synchronization processes. Therefore, for a log entry, several synchronous data structures 901 may be generated and they are different from each other. This is not limited in this application.

Operation 4a): Update the old second log index according to the second log index replied by the target system.

In normal cases, the new second log index is a first log index of a synchronous data structure 901 in a previous batch. For the target system B shown in FIG. 10, when the master node receives the new second log index, the position of the new second log index is updated to continue to generate the synchronous data structure 901 according to the new second log index.

It may be learned that in some embodiments, in the real-time synchronization mode, data of the target system is continuously synchronized through a process of continuous advancement. In operation 2a), it may be ensured that data extracted from the log entry by each target system is orderly. In operation 4a), when the second log index is updated, it will not exceed the first log index of the synchronous data structure 901 in the previous batch, and there is no data gap, thereby ensuring the integrity of extracted data. In the real-time synchronization mode, only the order of the data is concerned, not the content of the data. After receiving the data, the target system still needs to parse the data.

In some embodiments, in the snapshot synchronization mode, the master node similarly maintains two indexes for each target system, i.e., a third log index (the foregoing log execution index (Exec-Index)) and a fourth log index (the foregoing synchronized progress (Finish-Index) in the snapshot synchronization mode). The initial values are all starting indexes 0, and a generation procedure of the snapshot data structure 902 is as follows.

Operation 1b): The target system first injects an execution script and a synchronization configuration into the distributed source data system, where the synchronization configuration specifies the time and size of transmitting snapshot data, and the execution script is responsible for replacing the target system to pre-process the log entries.

Operation 2b): After a new log entry passes the consensus verification, the consensus log index increases, the execution script directly processes the log entry (including parsing and execution of the service logic), and an execution result is temporarily stored in the master node (and the standby node). Meanwhile, the third log index advances. In some embodiments, the service processing logic (i.e., the execution script) is pre-stored in the distributed source data system to replace the target system to complete data processing. Finally, the execution result needs to be synchronized to the target system through the snapshot, thereby improving the data processing efficiency of the target system.

Operation 3b): When a configuration threshold (such as a preset capacity threshold or a preset duration threshold) is triggered, a temporarily stored processing result is extracted and packaged into snapshot data in a specific format, and the snapshot data structure 902 is generated. The snapshot data is equivalent to a data set within an interval (fourth log index, third log index] (where left is open and right is closed).

Operation 4b): Processing logic of a synchronization progress table after the target system replies is similar to that in operation 4a) in the real-time synchronization mode. The fourth log index is updated to the position of the third log index, and then operation 2b) continues to be performed.

For the target system C shown in FIG. 10, the master node may generate snapshot data through the foregoing procedure and transmit the snapshot data to the target system C.

In some embodiments, the snapshot synchronization mode is a process of periodically advancing the synchronization progress. An advancement span of the fourth log index is relatively large. However, the advancement of the third log index in operation 2b) is real-time and orderly. Therefore, there is no data gaps in the snapshot synchronization mode, so that the data has integrity. In addition, the data processing efficiency of the target system may be improved.

In some embodiments, through the distributed source data system, data consistency may further be maintained in abnormal cases. Specifically, abnormal scenes mainly include the following aspects.

### 1. Network fault:

Data synchronized by the distributed source data system cannot reach the target system, or a reply from the target system cannot reach the distributed source data system. For each target system, the distributed source data system starts timing when transmitting synchronous data. If receiving the reply from the target system before the timing expires, the distributed source data system continues to perform normally; otherwise, the distributed source data system repeatedly performs the transmission operation, and related indexes do not change until the retrying succeeds.

### 2. Switching of master node:

The distributed source data system switches the master node to another node due to network reasons or load balancing reasons. The master node may be switched at any time. Consequently, two nodes may simultaneously transmit synchronous data to the target system. Therefore, the new master node may wait for a time period, so that the old master node can complete data that is being synchronized. When the old master node finds that there is a new master node, the old master node no longer transmits new synchronous data, and only completes a task that is being synchronized. After completing the task, an index of each target system no longer changes, and the new master node is notified of a latest synchronization progress table. In this case, the new master node continues to perform data synchronization according to the latest index. However, due to reasons such as a network fault, the old master node may fail to complete the synchronization task that is being performed. In this case, the old master node does not retry, and directly notifies the new master node.

### 3. Crash of target system:

After crash, the target system cannot reply to the synchronized progress of the distributed source data system. In this case, the target system may synchronize only a part of the data. In this case, a solution is the same as that of the network fault. After receiving no reply, the distributed source data system periodically retries. After restarting, the target system can still receive data that has not been processed last time, so that the integrity and consistency of the data are not affected.

### 4. Crash of distributed source data system:

Each node in the distributed source data system periodically persists the synchronization progress table. If the distributed source data system restores, related indexes of target systems recorded in the magnetic disk are read, and the data synchronization task continues to be performed.

Using the real-time synchronization mode as an example, FIG. 11 is a schematic diagram of a principle of crash rollback of a distributed source data system according to an embodiment of this application. In some embodiments, since persistent storage is periodically performed, during crash, a persistent second log index that may be restored from a magnetic disk is slightly less than a second log index before crash. In this case, the second log index is rolled back to the persistent second log index. The target system may receive a piece of processed synchronous data. However, due to the orderliness of the log entries, duplicate data may occur but no data gaps will be generated, so the target system may finally synchronize complete and consistent data.

In summary, based on the embodiments of this application, the following technical effects may be obtained.

First, the data can be synchronized to a heterogeneous system through a raft protocol. The exported data features orderliness, real-time performance, and reliability. The asynchronous transmission procedure does not affect the original system performance, and heterogeneous systems do not interfere with each other.

Second, the technical solution is highly adaptable, providing both the real-time synchronization mode and the snapshot synchronization mode for different scenes.

The real-time synchronization is applicable to scenes having relatively high requirements on data sequence, timeliness, and integrity. It ensures data orderliness and integrity, and duplicate transmission only occurs in some abnormal scenes. Meanwhile, the GDEF data is synchronized to ensure that processing logic at an application layer can also be synchronized.

Periodic snapshot synchronization moves the processing logic of the target system to the RSS, making it applicable to scenes where data sequence and timeliness requirements are not high or machine performance of the target system is relatively weak. A calculation execution process is completed on the RSS. A synchronization process may be triggered at relatively long intervals, and the target system requires no further processing after receiving the snapshot, thereby effectively reducing the pressure of the target system, and ensuring the integrity of data transmitted through the snapshot.

The two modes both satisfy the data consistency requirement.

Finally, in scenes where data synchronization is required but network conditions are poor or machines are prone to failure, the target system may cause data loss due to network partitioning or crash. This technical solution provides exception recovery capabilities. Through replaying and retrying, data synchronization still has reliability, fault tolerance, and consistency in various abnormal cases. The raft protocol characteristics of the RSS ensure that data passing the consensus verification will not be lost, and the synchronization progress is maintained to ensure the integrity and consistency of the data. The synchronization progress can be updated only when the target system responds with successful processing. In this process, if an exception occurs, the RSS attempts to replay data that is not successfully processed. Due to the orderliness of the raft log, the RSS can always locate the starting point for data replay. Meanwhile, the replay position for each target system is recorded independently. For the target system, data processed by the target system is always reliable. The synchronization procedure is fault-tolerant, so that final consistency of the data can be ensured even if a relatively serious exception occurs.

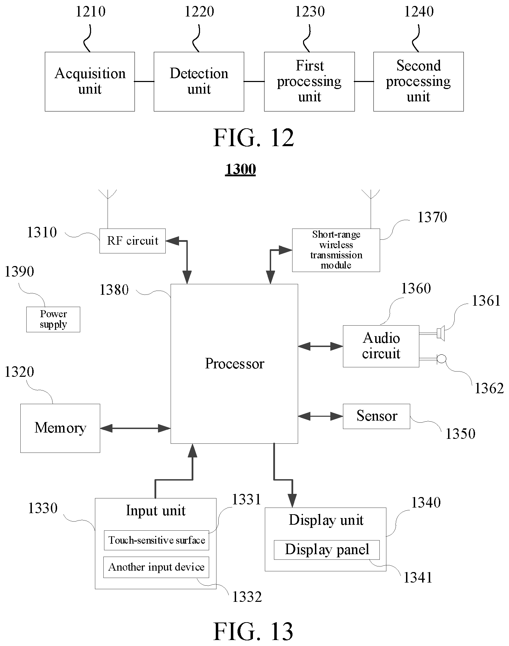

Referring to FIG. 12, in an embodiment of this application, a data synchronization apparatus is further provided, which may be applied to a data transmitting end. The data synchronization apparatus includes:
an acquisition unit 1210, configured to acquire target data to be transmitted to a data receiving end;
a detection unit 1220, configured to detect a network transmission state between an electronic device and the data receiving end, and determine, according to the network transmission state, whether a data synchronization mode corresponding to the data receiving end is a real-time synchronization mode or a snapshot synchronization mode;
a first processing unit 1230, configured to directly transmit, when it is determined that the data synchronization mode is the real-time synchronization mode, the target data to the data receiving end; and
a second processing unit 1240, configured to process, when it is determined that the data synchronization mode is the snapshot synchronization mode, the target data according to pre-stored service processing logic of the data receiving end, and transmit snapshot data of a result of the processing to the data receiving end.

In some embodiments, the apparatus in some embodiments further includes a transformation unit. The transformation unit is specifically configured to:
transform the target data into a plurality of log entries, and determine a log index corresponding to each of the plurality of log entries.

In some embodiments, the first processing unit is specifically configured to:
acquire a system identifier of the data receiving end;
extract , from the plurality of log entries and according to the log index, a first quantity of log entries as a current batch of to-be-synchronized entries;
query a first log index corresponding to a first log entry at a tail position in the first quantity of log entries; and
transmit the system identifier, the current batch of to-be-synchronized entries, and the first log index to the data receiving end.

In some embodiments, the first processing unit is specifically configured to:
query a second log index most recently fed back by the data receiving end, the second log index indicating a second log entry at a tail position in a batch of log entries synchronized by the data receiving end; and
extract, starting from a log entry following the second log entry, the first quantity of log entries as the current batch of to-be-synchronized entries.

In some embodiments, the first processing unit is specifically configured to:
detect a second quantity of data receiving ends that are performing data synchronization at a current moment, and a third quantity of data synchronization requests received from a data source within a first preset time period before the current moment; and
determine the first quantity according to the second quantity and the third quantity,
the first quantity being negatively correlated with the second quantity, and the first quantity is negatively correlated with the third quantity.

In some embodiments, the first processing unit is further configured to:
record a first moment when transmitting the current batch of to-be-synchronized entries to the data receiving end;
extract, when a second log index corresponding to the current batch is received from the data receiving end within a second preset time period after the first moment, a next batch of to-be-synchronized entries from the plurality of log entries and according to the second log index; and
re-transmit, when the second log index is not received from the data receiving end within the second preset time period, the current batch of to-be-synchronized entries to the data receiving end.

In some embodiments, the second processing unit is specifically configured to:
acquire the system identifier of the data receiving end;
process the plurality of log entries according to the service processing logic to obtain the result; and
when a data volume of the result that has not been transmitted reaches a preset capacity threshold, or duration after last snapshot data is transmitted reaches a preset duration threshold,
query a third log index corresponding to a last log entry that is currently processed;
package, based on a preset snapshot data structure, the result that has not been transmitted into to-be-transmitted snapshot data; and
transmit the system identifier, the to-be-transmitted snapshot data, and the third log index to the data receiving end.

In some embodiments, the detection unit is specifically configured to:
detect network environment parameters between the electronic device and the data receiving end.

The determining, according to the network transmission state, whether a data synchronization mode corresponding to the data receiving end is a real-time synchronization mode or a snapshot synchronization mode includes:
determining a network quality score corresponding to the data receiving end according to the network environment parameters;
determining, when the network quality score is greater than a preset score threshold, that the data synchronization mode is the real-time synchronization mode; and
determining, when the network quality score is less than or equal to the preset score threshold, that the data synchronization mode is the snapshot synchronization mode.

In some embodiments, the data transmitting end is a distributed source data system, the distributed source data system includes a master node and a plurality of slave nodes, and the master node is configured for synchronously transmitting data to a plurality of data receiving ends. The acquisition unit is specifically configured to:
acquire original data through the master node, and transforming the original data to obtain standard data conforming to a GDEF; and
transmit the standard data to the slave nodes through the master node, perform consensus on the standard data through the slave nodes, and determine the standard data after the consensus is achieved as the target data.

In some embodiments, the acquisition unit is specifically configured to:
hash the standard data through the master node to obtain a first hash value; and transmit the standard data and the first hash value to the slave nodes;
for each of the slave nodes, hash the standard data to obtain a second hash value, and check consistency between the first hash value and the second hash value to obtain a consistency check result corresponding to the standard data; and
determine, when consistency check results of more than half of the slave nodes indicate that the consensus is achieved, that the consensus is achieved for the standard data.

In some embodiments, the data transmitting end is a distributed source data system, the distributed source data system includes a master node and a plurality of slave nodes, and the master node is configured for synchronously transmitting data to a plurality of data receiving ends. The apparatus in some embodiments further includes a switching unit. The switching unit is specifically configured to:
synchronize data in the master node to the slave nodes;
detect an operating state of the distributed source data system;
determine, when the operating state indicates that the master node needs to be switched, a new master node from the slave nodes;
detect whether an uncompleted data synchronization task exists in an old master node, the uncompleted data synchronization task indicating that to-be-synchronized data has been transmitted but a log index is not received from the data receiving end afterwards; and
stop transmitting, when the uncompleted data synchronization task exists in the old master node, new to-be-synchronized data through the old master node, wait until the log index is received from the data receiving end, and switch from the old master node to the new master node.

In some embodiments, content in the embodiment of the data synchronization method shown in FIG. 5 is applicable to the embodiment of the data synchronization apparatus. Functions specifically realized by the embodiment of the data synchronization apparatus are the same as those specifically realized by the embodiment of the data synchronization method shown in FIG. 5, and beneficial effects achieved by the embodiment of the data synchronization apparatus are also the same as those achieved by the embodiment of the data synchronization method shown in FIG. 5.

The embodiments of this application further disclose an electronic device, including:
at least one processor; and
at least one memory, configured to store at least one program,
the at least one program, when executed by the at least one processor, causing the at least one processor to implement the embodiment of the data synchronization method shown in FIG. 5.

The electronic device in some embodiments may be a terminal device, a computer device, or a server device.

In some examples, FIG. 13 is a schematic structural diagram of an electronic device according to an embodiment of this application. An example in which the electronic device is a terminal device is used. In FIG. 13, an electronic device 1300 may include components such as a radio frequency (RF) circuit 1310, a memory 1320 including one or more computer-readable storage media, an input unit 1330, a display unit 1340, a sensor 1350, an audio circuit 1360, a short-range wireless transmission module 1370, a processor 1380 including one or more processing cores, and a power supply 1390. A person skilled in the art may understand that the structure of the device shown in FIG. 13 does not constitute a limitation to the terminal device, and the terminal device may include more or fewer components than those illustrated, or a combination of some components, or have a different arrangement of components.

The RF circuit 1310 may be configured to receive and transmit signals during an information receiving and transmitting process or a call process. Specifically, the RF circuit 1310 receives downlink information from a base station, and then delivers the downlink information to one or more processors 1380 for processing. In addition, the related uplink data is transmitted to the base station. Generally, the RF circuit 1310 includes, but is not limited to, an antenna, at least one amplifier, a tuner, one or more oscillators, a subscriber identity module (SIM) card, a transceiver, a coupler, a low noise amplifier (LNA), and a duplexer. In addition, the RF circuit 1310 may further communicate with a network and other devices through wireless communication. The wireless communication may use any communication standard or protocol, including, but not limited to, global system of mobile communication (GSM), general packet radio service (GPRS), code division multiple access (CDMA), wideband code division multiple access (WCDMA), long term evolution (LTE), e-mail, short messaging service (SMS), and the like.

The memory 1320 may be configured to store software programs and modules (or units). The processor 1380 executes various functional applications and data processing by running the software programs and modules (or units) stored in the memory 1320. The memory 1320 may mainly include a program storage area and a data storage area. The program storage area may store an operating system, an APP required by at least one function (such as a sound playing function and an image playing function), etc. The data storage area may store data (such as audio data and a phone book) created according to the use of the electronic device 1300. In addition, the memory 1320 may include a high-speed random access memory (RAM) and a non-volatile memory, such as at least one magnetic disk storage device, a flash memory device, or other volatile solid-state storage devices. Correspondingly, the memory 1320 may further include a memory controller to provide access to the memory 1320 by the processor 1380 and the input unit 1330. Although FIG. 13 shows the RF circuit 1310, in some embodiments, the RF circuit 1310 is not a necessary component of the electronic device 1300 and may be omitted as needed without changing the scope of the essence of the present disclosure.

The input unit 1330 may be configured to receive entered digit or character information and generate keyboard, mouse, joystick, optical, or trackball signal input related to subscriber settings and function control. Specifically, the input unit 1330 may include a touch-sensitive surface 1331 and another input device 1332. The touch-sensitive surface 1331, alternatively referred to as a touch display screen or a touch panel, may collect object's touch operations on or near the touch-sensitive surface 1331 (such as object's operations on or near the touch-sensitive surface 1331 using any suitable substance or accessory, such as a finger or a stylus), and drive a corresponding connection apparatus according to a preset program. In some embodiments, the touch-sensitive surface 1331 may include two parts: a touch detection apparatus and a touch controller. The touch detection apparatus detects a touch orientation of an object, detects a signal generated by a touch operation, and transfers the signal to the touch controller. The touch controller receives touch information from the touch detection apparatus, transforms the touch information into touch point coordinates, and transmits the touch point coordinates to the processor 1380. Moreover, the touch controller can receive and execute instructions transmitted by the processor 1380. In addition, the touch-sensitive surface 1331 may be implemented using various types such as resistive, capacitive, infrared, and surface acoustic waves. In addition to the touch-sensitive surface 1331, the input unit 1330 may further include another input device 1332. Specifically, the another input device 1332 may include, but is not limited to, one or more of a physical keyboard, a function key (such as a volume control key or a switch key), a trackball, a mouse, and a joystick.

The display unit 1340 may be configured to display information inputted by the object or information provided for the object, and various graphical object interfaces for controlling the electronic device 1300. These graphical object interfaces may be formed by graphics, text, icons, videos, and any combination thereof. The display unit 1340 may include a display panel 1341. In some embodiments, the display panel 1341 may be configured using a liquid crystal display (LCD), an organic light-emitting diode (OLED), or the like. Further, the touch-sensitive surface 1331 may be overlaid on the display panel 1341. When the touch-sensitive surface 1331 detects a touch operation thereon or thereabout, the touch operation is transmitted to the processor 1380 to determine the type of the touch event. Then, the processor 1380 provides a corresponding visual output on the display panel 1341 according to the type of the touch event. Although, in FIG. 13, the touch-sensitive surface 1331 and the display panel 1341 are used as two separate components to realize input and output functions, in some embodiments, the touch-sensitive surface 1331 and the display panel 1341 may be integrated to realize the input and output functions.

The electronic device 1300 may further include at least one sensor 1350, such as an optical sensor, a motion sensor, and other sensors. Specifically, the optical sensor may include an ambient light sensor and a proximity sensor. The ambient light sensor may adjust the brightness of the display panel 1341 according to the brightness of ambient light, and the proximity sensor may turn off the display panel 1341 and/or backlight when the electronic device 1300 moves to the ear. As one type of motion sensor, a gravity acceleration sensor may detect the magnitude of accelerations in various directions (generally on three axes), may detect the magnitude and direction of the gravity when static, and may be applied to an application that recognizes the posture of the mobile phone (for example, switching between landscape orientation and portrait orientation, related games, and magnetometer posture calibration), functions related to vibration recognition (such as pedometer and knocking), and the like. Other sensors such as a gyroscope, a barometer, a hygrometer, a thermometer, and an infrared sensor, which may be configured in the electronic device 1300, are not further described herein.

The audio circuit 1360, a speaker 1361, and a microphone 1362 may provide audio interfaces between the object and the electronic device 1300. The audio circuit 1360 may transform received audio data into an electric signal and transmit the electric signal to the speaker 1361. The speaker 1361 transforms the electric signal into a sound signal and outputs the sound signal. In addition, the microphone 1362 transforms a collected sound signal into an electric signal. The electric signal is received by the audio circuit 1360 and transformed into audio data, and then the audio data is outputted to the processor 1380 for processing. Then, the audio data is transmitted to another electronic device via the RF circuit 1310, or outputted to the memory 1320 for further processing. The audio circuit 1360 may further include an earphone jack to provide communication between an external earphone and the electronic device 1300.

The short-range wireless transmission module 1370 may be a wireless fidelity (WIFI) module, a Bluetooth module, an infrared module, or the like. The electronic device 1300 may perform, through the short-range wireless transmission module 1370, information transmission with a wireless transmission module provided on another device.

The processor 1380 is a control center of the electronic device 1300, connects various parts of the entire device using various interfaces and lines, and performs various functions of the electronic device 1300 and processes data by running or executing software programs or modules stored in the memory 1320 and invoking data stored in the memory 1320, thereby controlling the entire device. In some embodiments, the processor 1380 may include one or more processing cores. In some embodiments, the processor 1380 may integrate an application processor and a modem processor. The application processor mainly processes an operating system, an object interface, an APP, and the like. The modem processor mainly processes wireless communication. In some embodiments, the foregoing modem processor may not be integrated into the processor 1380.

The electronic device 1300 further includes the power supply 1390 (such as a battery) for supplying power to various components. In some embodiments, the power supply 1390 may be logically connected to the processor 1380 through a power supply management system so that functions such as managing charging, discharging, and power consumption are realized through the power supply management system. The power supply 1390 may further include one or more of a direct current or alternating current power supply, a re-charging system, a power failure detection circuit, a power supply converter or inverter, a power supply state indicator, and any other assemblies.

Although not shown in the figure, the electronic device 1300 may further include a camera, a Bluetooth module, and the like. Details are not described herein again.

The embodiments of this application further disclose a computer-readable storage medium, having a program executable by a processor stored therein, the program executable by the processor, when executed by the processor, being configured for implementing the embodiment of the data synchronization method shown in FIG. 5.

In some embodiments, content in the embodiment of the data synchronization method shown in FIG. 5 is applicable to the embodiment of the computer-readable storage medium. Functions specifically realized by the embodiment of the computer-readable storage medium are the same as those specifically realized by the embodiment of the data synchronization method shown in FIG. 5, and beneficial effects achieved by the embodiment of the computer-readable storage medium are also the same as those achieved by the embodiment of the data synchronization method shown in FIG. 5.

The embodiments of this application further disclose a computer program product or a computer program, including a computer instruction. The computer instruction is stored in a computer-readable storage medium. The processor of the electronic device shown in FIG. 13 may read the computer instruction from the foregoing computer-readable storage medium and execute the computer instruction to cause the computer device to perform the embodiment of the data synchronization method shown in FIG. 5.

In some embodiments, content in the embodiment of the data synchronization method shown in FIG. 5 is applicable to the embodiment of the computer program product or computer program. Functions specifically realized by the embodiment of the computer program product or computer program are the same as those specifically realized by the embodiment of the data synchronization method shown in FIG. 5, and beneficial effects achieved by the embodiment of the computer program product or computer program are also the same as those achieved by the embodiment of the data synchronization method shown in FIG. 5.

In some exemplary embodiments, functions/operations mentioned in the block diagrams may not occur in the order mentioned in the operation diagrams. For example, depending on the involved functions/operations, two blocks shown in succession may be substantially simultaneously executed or may sometimes be executed in reverse order. In addition, the embodiments presented and described in the flowcharts of this application are provided by way of example to provide a more comprehensive understanding of the technology. The disclosed method is not limited to the operations and logical procedures presented in this specification. Exemplary embodiments are contemplated, in which an order of various operations is changed and sub-operations that are described as parts of a large operation are independently performed.

In addition, although this application is described in the context of functional modules, unless otherwise stated to the contrary, one or more of the functions and/or features may be integrated in a single physical apparatus and/or software module, or one or more functions and/or features may be implemented in an independent physical apparatus or software module. In some embodiments, a detailed discussion about the actual implementation of each module is not necessary for understanding this application. More specifically, considering attributes, functions, and internal relationships of various functional modules in the apparatus disclosed in this specification, actual implementations of the modules will be understood within conventional technologies of engineers. Therefore, a person skilled in the art can implement this application set forth in the claims using ordinary technologies without undue experiments. In the embodiments of this application, the particular concepts disclosed are merely illustrative instead of limiting the scope of this application. The scope of this application is determined by the full scope of the appended claims and their equivalents.

Functions, if implemented in software functional units and sold or used as stand-alone products, may be stored in a computer-readable storage medium. Based on such an understanding, the technical solutions of this application essentially, or the part contributing to the conventional technologies, or a part of the technical solutions may be implemented in a form of a software product. The computer software product is stored in a storage medium and includes a plurality of instructions for causing a computer device (which may be a personal computer, a server, or a network device) to perform all or some of the operations of the methods described in the embodiments of this application. The foregoing storage medium includes: various media capable of storing program code, such as a USB flash drive, a removable hard disk, a read-only memory (ROM), a RAM, a magnetic disk, or an optical disc.

In the embodiments of this application, the term "module" or "unit" refers to a computer program having a predetermined function or a part of the computer program, works together with other relevant parts to achieve a predetermined objective, and may be fully or partially implemented through software, hardware (such as a processing circuit or a memory), or a combination thereof. Similarly, one processor (or a plurality of processors or memories) may be configured to implement one or more modules or units. In addition, each module or unit may be a part of an overall module or unit containing a function of the module or unit.

Logic and/or operations shown in the flowcharts or described herein in other manners, for example, may be considered as a sequential list of executable instructions configured for implementing logical functions, and may be specifically implemented in any computer-readable storage medium, to be used by an instruction execution system, apparatus, or device (for example, a computer-based system, a system including a processor, or another system that may obtain an instruction from the instruction execution system, apparatus, or device and execute the instruction), or to be used in combination with such an instruction execution system, apparatus, or device. In this specification, the "computer-readable storage medium" may be any apparatus that may contain, store, communicate with, propagate, or transmit a program for use by an instruction execution system, apparatus, or device or for use in combination with such an instruction execution system, apparatus, or device.

Various parts of this application may be implemented using hardware, software, firmware, or a combination thereof. In the foregoing implementations, a plurality of operations or methods may be implemented using software or firmware stored in a memory and executed by an appropriate instruction execution system. For example, if the operations or methods are implemented using hardware, as in another embodiment, any one or a combination of the following technologies known in the art may be used: a discrete logic circuit having a logic gate circuit configured to implement a logic function on a data signal, an application specific integrated circuit having an appropriate combined logic gate circuit, a programmable gate array (PGA), a field programmable gate array (FPGA), and the like.

In the foregoing description of this specification, descriptions with reference to the terms such as "an implementation/embodiment", "another implementation/embodiment", or "some implementations/embodiments" mean that specific features, structures, materials, or characteristics described with reference to the implementations or examples are contained in at least one implementation or example of this application. In this specification, schematic expressions of the foregoing terms do not necessarily refer to the same implementation or example. Furthermore, the specific features, structures, materials, or characteristics described may be combined in any suitable manner in any one or more implementations or examples.

Although the implementations of this application have been shown and described, a person skilled in the art may understand that various changes, modifications, replacements, and variations may be made to these implementations without departing from the principle and spirit of this application. The scope of this application is defined by the claims and their equivalents.

The foregoing describes preferred embodiments of this application in detail, but this application is not limited to the embodiments. A person skilled in the art may make various equivalent variations or replacements without departing from the spirit of this application. All such equivalent variations or replacements fall within the scope defined by the claims of this application.

## Claims

1. A data synchronization method, executable by an electronic device, and comprising:
acquiring target data to be transmitted to a data receiving end;
detecting a network transmission state between the electronic device and the data receiving end, and determining, according to the network transmission state, whether a data synchronization mode corresponding to the data receiving end is a real-time synchronization mode or a snapshot synchronization mode;
directly transmitting, when it is determined that the data synchronization mode is the real-time synchronization mode, the target data to the data receiving end; and
processing, when it is determined that the data synchronization mode is the snapshot synchronization mode, the target data according to pre-stored service processing logic of the data receiving end, and transmitting snapshot data of a result of the processing to the data receiving end.

2. The data synchronization method according to claim 1, further comprising:
transforming the target data into a plurality of log entries, and determining a log index corresponding to each of the plurality of log entries.

3. The data synchronization method according to claim 2, wherein the directly transmitting, when it is determined that the data synchronization mode is the real-time synchronization mode, the target data to the data receiving end comprises:
acquiring a system identifier of the data receiving end;
extracting, from the plurality of log entries and according to the log index, a first quantity of log entries as a current batch of to-be-synchronized entries;
querying a first log index corresponding to a first log entry at a tail position in the first quantity of log entries; and
transmitting the system identifier, the current batch of to-be-synchronized entries, and the first log index to the data receiving end.

4. The data synchronization method according to claim 3, wherein the extracting, from the plurality of log entries and according to the log index, a first quantity of log entries as a current batch of to-be-synchronized entries comprises:
querying a second log index most recently fed back by the data receiving end, the second log index indicating a second log entry at a tail position in a batch of log entries synchronized by the data receiving end; and
extracting, starting from a log entry following the second log entry, the first quantity of log entries as the current batch of to-be-synchronized entries.

5. The data synchronization method according to claim 3 or 4, wherein the first quantity is determined through the following operations:
detecting a second quantity of data receiving ends that are performing data synchronization at a current moment, and a third quantity of data synchronization requests received from a data source within a first preset time period before the current moment; and
determining the first quantity according to the second quantity and the third quantity, the first quantity being negatively correlated with the second quantity, and the first quantity is negatively correlated with the third quantity.

6. The data synchronization method according to any one of claims 3 to 5, further comprising:
recording a first moment when transmitting the current batch of to-be-synchronized entries to the data receiving end;
extracting, when a second log index corresponding to the current batch is received from the data receiving end within a second preset time period after the first moment, a next batch of to-be-synchronized entries from the plurality of log entries and according to the second log index; and
re-transmitting, when the second log index is not received from the data receiving end within the second preset time period, the current batch of to-be-synchronized entries to the data receiving end.

7. The data synchronization method according to any one of claims 2 to 6, wherein the processing, when it is determined that the data synchronization mode is the snapshot synchronization mode, the target data according to pre-stored service processing logic of the data receiving end, and transmitting snapshot data of a result of the processing to the data receiving end comprises:
acquiring the system identifier of the data receiving end;
processing the plurality of log entries according to the service processing logic to obtain the result; and
when a data volume of the result that has not been transmitted reaches a preset capacity threshold, or duration after last snapshot data is transmitted reaches a preset duration threshold,
querying a third log index corresponding to a last log entry that is currently processed;
packaging, based on a preset snapshot data structure, the result that has not been transmitted into to-be-transmitted snapshot data; and
transmitting the system identifier, the to-be-transmitted snapshot data, and the third log index to the data receiving end.

8. The data synchronization method according to any one of claims 1 to 7, wherein the detecting a network transmission state between the electronic device and the data receiving end comprises:
detecting network environment parameters between the electronic device and the data receiving end; and
the determining, according to the network transmission state, whether a data synchronization mode corresponding to the data receiving end is a real-time synchronization mode or a snapshot synchronization mode comprises:
determining a network quality score corresponding to the data receiving end according to the network environment parameters;
determining, when the network quality score is greater than a preset score threshold, that the data synchronization mode is the real-time synchronization mode; and
determining, when the network quality score is less than or equal to the preset score threshold, that the data synchronization mode is the snapshot synchronization mode.

9. The data synchronization method according to any one of claims 1 to 8, wherein the electronic device is a distributed source data system, and the distributed source data system comprises a master node and a plurality of slave nodes; and
the acquiring target data to be transmitted to a data receiving end comprises:
acquiring original data through the master node, and transforming the original data to standard data conforming to a general data exchange format, GDEF; and
transmitting the standard data to the slave nodes through the master node, performing consensus on the standard data through the slave nodes, and determining the standard data after the consensus is achieved as the target data.

10. The data synchronization method according to claim 9, wherein the transmitting the standard data to the slave nodes through the master node comprises:
hashing the standard data through the master node to obtain a first hash value; and
transmitting the standard data and the first hash value to the slave nodes;
the performing consensus on the standard data through the slave nodes comprises:
for each of the slave nodes, hashing the standard data to obtain a second hash value, and checking consistency between the first hash value and the second hash value to obtain a consistency check result corresponding to the standard data; and
determining, when consistency check results of more than half of the slave nodes indicate that the consensus is achieved, that the consensus is achieved for the standard data.

11. The data synchronization method according to any one of claims 1 to 10, wherein the electronic device is the distributed source data system, and the distributed source data system comprises the master node and the plurality of slave nodes; and the method further comprises:
synchronizing data in the master node to the slave nodes;
detecting an operating state of the distributed source data system;
determining, when the operating state indicates that the master node needs to be switched, a new master node from the slave nodes;
detecting whether an uncompleted data synchronization task exists in an old master node, the uncompleted data synchronization task indicating that to-be-synchronized data has been transmitted but a log index is not received from the data receiving end afterwards; and
stopping transmitting, when the uncompleted data synchronization task exists in the old master node, new to-be-synchronized data through the old master node, waiting until the log index is received from the data receiving end, or waiting for a timeout, and switching from the old master node to the new master node.

12. A data synchronization apparatus, comprising:
an acquisition unit, configured to acquire target data to be transmitted to a data receiving end;
a detection unit, configured to detect a network transmission state between an electronic device and the data receiving end, and determine, according to the network transmission state, whether a data synchronization mode corresponding to the data receiving end is a real-time synchronization mode or a snapshot synchronization mode;
a first processing unit, configured to directly transmit, when it is determined that the data synchronization mode is the real-time synchronization mode, the target data to the data receiving end; and
a second processing unit, configured to process, when it is determined that the data synchronization mode is the snapshot synchronization mode, the target data according to pre-stored service processing logic of the data receiving end, and transmit snapshot data of a result of the processing to the data receiving end.

13. The data synchronization apparatus according to claim 12, further comprising:
a transformation unit, configured to transform the target data into a plurality of log entries, and determine a log index corresponding to each of the plurality of log entries.

14. The data synchronization apparatus according to claim 13, wherein the first processing unit is configured to acquire a system identifier of the data receiving end; extract from the plurality of log entries and according to the log index, a first quantity of log entries as a current batch of to-be-synchronized entries; query a first log index corresponding to a first log entry at a tail position in the first quantity of log entries; and transmit the system identifier, the current batch of to-be-synchronized entries, and the first log index to the data receiving end.

15. The data synchronization apparatus according to claim 13 or 14, wherein the second processing unit is configured to acquire the system identifier of the data receiving end; process the plurality of log entries according to the service processing logic to obtain the result; and when a data volume of the result that has not been transmitted reaches a preset capacity threshold, or duration after last snapshot data is transmitted reaches a preset duration threshold,, query a third log index corresponding to a last log entry that is currently processed; package, based on a preset snapshot data structure, the result that has not been transmitted into to-be-transmitted snapshot data; and transmit the system identifier, the to-be-transmitted snapshot data, and the third log index to the data receiving end.

16. The data synchronization apparatus according to any one of claims 12 to 15, wherein the detection unit is configured to detect network environment parameters between the electronic device and the data receiving end; determine a network quality score corresponding to the data receiving end according to the network environment parameters; determine, when the network quality score is greater than a preset score threshold, that the data synchronization mode is the real-time synchronization mode; and determine, when the network quality score is less than or equal to the preset score threshold, that the data synchronization mode is the snapshot synchronization mode.

17. The data synchronization apparatus according to any one of claims 12 to 16, wherein the electronic device is a distributed source data system, and the distributed source data system comprises a master node and a plurality of slave nodes; and
the acquisition unit is configured to acquire original data through the master node, and transform the original data to obtain standard data conforming to a general data exchange format, GDEF; and transmit the standard data to the slave nodes through the master node, perform consensus on the standard data through the slave nodes, and determine the standard data after the consensus is achieved as the target data.

18. An electronic device, comprising a memory and a processor, the memory having a computer program stored therein, and the processor, when executing the computer program, implementing the data synchronization method according to any one of claims 1 to 11.

19. A computer-readable storage medium, having a computer program stored therein, the computer program, when executed by a processor, implementing the data synchronization method according to any one of claims 1 to 11.

20. A computer program product, comprising a computer program which, when executed by a processor, implements the data synchronization method according to any one of claims 1 to 11.
